# EUROPEAN PATENT APPLICATION

(11) **EP 1 065 846 A1**
(43) Date of publication of application: **03.01.2001**
(21) Application number: 99901222.2
(22) Date of filing: 02.02.1999
(51) Int. Cl.: H04L 12/56

(54) **COMMUNICATION NETWORK AND EXCHANGER**

(30) Priority: 17.03.1998 JP 6652998; 01.09.1998 JP 24686798
(71) Applicant: FUJITSU LIMITED, Kawasaki-shi, Kanagawa 211-8588 (JP)
(72) Inventor: KAKEMIZU, Mitsuaki, Fujitsu Ltd, Kawasaki-shi, Kanagawa 211-8588 (JP); MURATA, Kazunori, Fujitsu Kyushu Com. Syst. Ltd., Fukuoka-shi, Fukuoka 814-8588 (JP)
(74) Representative: HOFFMANN - EITLE
(86) International application number: JP9900440
(87) International publication number: WO9948254

(57) **Abstract**

PNNI networks are appropriately interconnected through a public network so as to reduce an amount of PNNI processing, and enhance bandwidth utilization efficiency. A communication network system (1) includes a public network (2), a plurality of local area networks (21)-(24) arranged in different local areas, and a plurality of exchanges (LS1)-(LS4). The exchanges (LS1)-(LS4) execute interface processing between the public network (2) and the local area networks (21)-(24) so as to form private networks (PG-A.1)-(PG-A.4). The exchanges (LS1)-(LS4) are arranged in a ring topology so that information for communication is transmitted and received between adjacent ones of the exchanges.

## Description

### TECHNICAL FIELD

The present invention relates to a communication network system and an exchange. In particular, the present invention relates to a communication network system in which communication is conducted between an arbitrary number of sources and an arbitrary number of destinations, and an exchange which interconnects an arbitrary number of ATM-LANs (Asynchronous Transfer Mode Local Area Networks) through a public network.

### BACKGROUND ART

ATM is a transmission mode which is developed for enabling communication of multimedia information including data, sound, moving pictures, and the like in a single network with transmission rates and quality required in individual medias, and is used in public networks.

Recently, higher throughput is required in the fields of telecommunications due to the increasing prevalence of the Internet and the increase in the number of applications (e.g., video conferences) which require substantial QoS. However, the conventional LANs cannot guarantee sufficient bandwidth and quality for the requirement of real-time transmission of the sound, moving pictures, and the like.

Therefore, currently, a number of ATM-LANs are under construction. In the ATM-LANs, the ATM is applied to LANs. In particular, there are demands for techniques which realize economical, seamless connection between remote ATM-LANs through a public network.

In addition, it is expected that demands for global PNNI (Private Network to Network Interface) internetworking will further increase in the future, since the prevalence of the Internet is expected to further increase, and the need for extranets is increasing. The global PNNI internetworking enables communication between an arbitrary number of ATM-LANs through a plurality of public networks.

While B-ISUP (Broadband ISDN User Part) is mainly used as an NNI (Network Node Interface) protocol for establishing a VC (virtual channel) in the public networks, the NNI protocol which is mainly used in the ATM-LANs is PNNI, which provides a routing protocol in addition to a signaling protocol, although the routing protocol is not provided by the B-ISUP.

Therefore, in order to realize establishment of a seamless VC, It is necessary to establish a communication system which emulates the PNNI in the public networks.

The ATM Forum (ATM Forum, "Specification of Interworking among ATM Networks (DRAFT)," ATM Forum/BTD-RA-CS-IAN-0.106, 1998) provides a mode of connection between remote ATM-LANs through a public network.

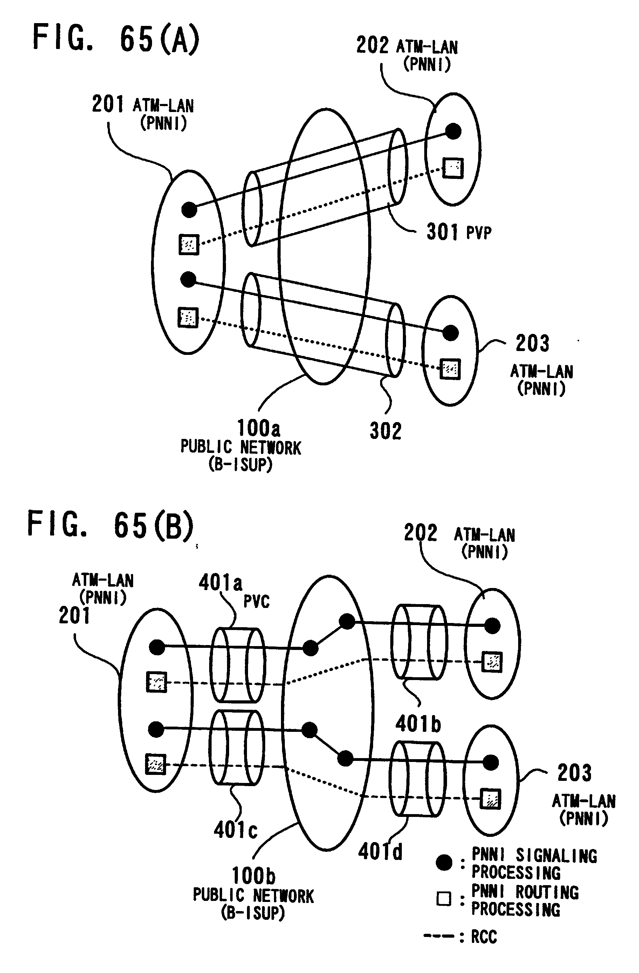

Figs. 65(A) and 65(B) are diagrams illustrating the conventional modes of connection between ATM-LANs. Fig. 65(A) exhibits a mode of connection between specific ATM-LANs by a PVP (Permanent Virtual Path), and Fig. 65(B) exhibits a mode of connection between specific ATM-LANs through a RCC (Routing Control Channel) using a PVC (Permanent Virtual Connection).

In Fig. 65(A), the ATM-LANs 201 to 203 have a function of executing PNNI signaling processing and PNNI routing processing, the ATM-LANs 201 and 202 are connected through the PVP 301, and the ATM-LANs 201 and 203 are connected through the PVP 302.

That is, in the connection mode of Fig. 65(A), the public network 100a executes neither the PNNI signaling processing nor the PNNI routing processing, and merely provides a PVP 301 or 302 for each connection between ATM-LANs.

In Fig. 65(B), the ATM-LANs 201 to 203 have a function of executing PNNI signaling processing and PNNI routing processing, and the public network 100b has a function of executing PNNI signaling processing. In addition, the ATM-LANs 201 and 202 are connected through the PVCs 401a and 401b, and the ATM-LANs 201 and 203 are connected through the PVCs 401c and 401d.

That is, in the connection mode of Fig. 65(B), the public network 100b does not execute the PNNI routing processing, and merely provides an RCC for each connection between ATM-LANs, where the RCC is used for transferring topology information in the PNNI routing. Further, the public network 100b establishes an SVC (Switched Virtual Connection) between a specific pair of ATM-LANs for the PNNI signaling, only when the SVC is necessary for conversion of the PNNI into the B-ISUP.

The connection mode of Fig. 65(B) is superior to the connection mode of Fig. 65(A) in the bandwidth utilization efficiency, since the SVC can be established for each call in the connection mode of Fig. 65(B). In addition, although the public network need not execute the PNNI routing in the connection modes of Figs. 65(A) and 65(B), each of the ATM-LANs connected through an RCC has topology information on only the other of the ATM-LANs.

Therefore, it is impossible to produce a DTL (Designated Transit List) for a call setup to ATM-LANs other than the above ATM-LANs to which the RCC is established, although the DTL is a necessary information element. That is, it is impossible to establish a connection to an ATM-LAN to which an RCC is not established.

As explained above, the connection modes of Figs. 65(A) and 65(B) can be used for only connections between a small number of specific ATM-LANs.

On the other hand, if the public network executes both the PNNI signaling processing and the PNNI routing processing, for connecting ATM-LANs, each ATM-LAN can receive topology information on all of the other ATM-LANs from the public network by merely establishing an RCC in the public network, and can therefore establish connections to an arbitrary number of ATM-LANs. However, this mode of connection between ATM-LANs has not been sufficiently studied yet for constructing an appropriate system. For example, connections between exchanges in the public network, path setting for the PNNI internetworking, and the like in the above connection mode have not been sufficiently studied yet.

### DISCLOSURE OF THE INVENTION

An object of the present invention is to provide a communication network system in which PNNI networks are appropriately interconnected through a public network, an amount of PNNI processing is reduced, and bandwidth utilization efficiency is enhanced.

Another object of the present invention is to provide an exchange which realize a communication network system in which PNNI networks are appropriately interconnected through a public network, an amount of PNNI processing is reduced, and bandwidth utilization efficiency is enhanced.

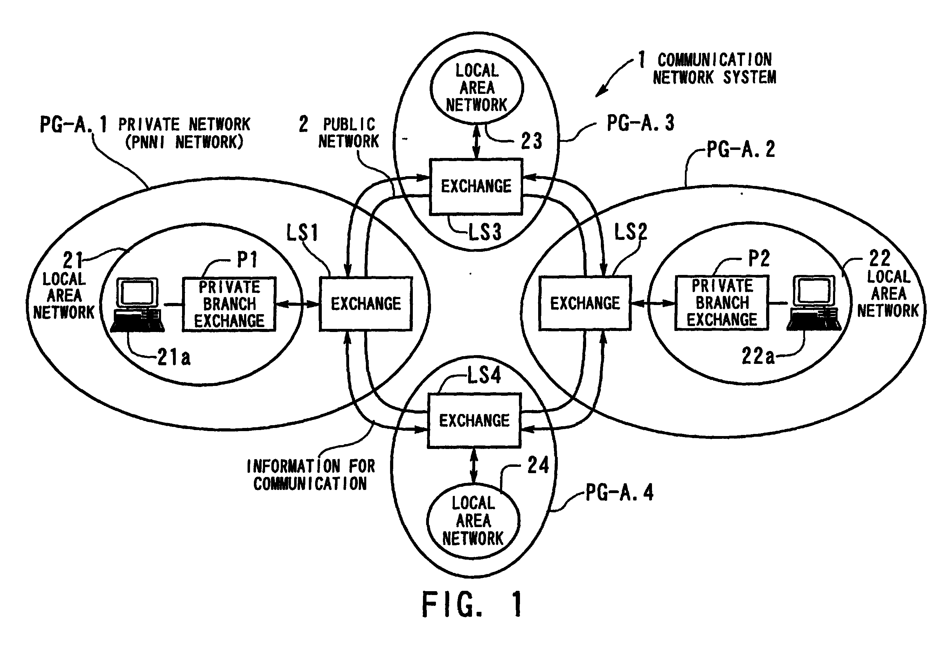

In order to accomplish the above-mentioned objects, a communication network system as illustrated in Fig. 1 is provided according to the present invention. That is, the communication network system according to the present invention comprises a public network 2, a plurality of local area networks 21 to 24 arranged in different local areas, and a plurality of exchanges LS1 to LS4, which connect the local area networks 21 to 24 with the public network 2 so as to form private networks PG-A.1 to PG-A.4. The exchanges LS1 to LS4 are arranged in a ring topology so that information for communication is transmitted and received between adjacent ones of the exchanges.

That is, the plurality of exchanges LS1 to LS4 connect the local area networks 21 to 24 with the public network 2 so as to form private networks PG-A.1 to PG-A.4, and are arranged in a ring topology so that information for communication is transmitted and received between adjacent ones of the exchanges.

The above and other objects, features and advantages of the present invention will become apparent from the following description when taken in conjunction with the accompanying drawings which illustrate preferred embodiment of the present invention by way of example.

### BRIEF DESCRIPTION OF DRAWINGS

Fig. 1 is a diagram illustrating the basic construction of the communication network system according to the present invention.
Fig. 2 is a diagram illustrating the construction of a network in the case where exchanges belong to more than one PNNI networks.
Fig. 3 is a diagram illustrating the principle of shortcut path setting in a single PG hierarchy.
Fig. 4 is a diagram illustrating the principle of shortcut path setting between different PG hierarchies.
Fig. 5 is a diagram illustrating the basic construction of a communication network system in which a destination LS resolution server is provided.
Fig. 6 is a diagram illustrating the basic construction of a communication network system in which a broadcast server is provided.
Fig. 7 is a diagram illustrating a physical configuration of a network.
Fig. 8 is a diagram illustrating a logical configuration of a network.
Fig. 9 is a block diagram illustrating the functions of a public ATM exchange which belongs to a single peer group.
Fig. 10 is a block diagram illustrating the functions of a public ATM exchange which belongs to a plurality of peer groups.
Fig. 11 is a diagram illustrating contents of an LS-PG correspondence table.
Fig. 12 is a diagram illustrating contents of a peer recognition table.
Fig. 13 is a diagram illustrating a sequence of collecting routing information in a public ATM exchange which belongs to a single PNNI network.
Fig. 14 is a diagram illustrating a format of a hello packet.
Fig. 15 is a diagram illustrating a format of a PTSE.
Fig. 16 is a diagram illustrating a format of a PTSP.
Fig. 17 is a diagram illustrating a flow of processing a message which is performed when the public ATM exchange receives a packet.
Fig. 18 is a diagram illustrating a sequence of collecting routing information in a public ATM exchange which belongs to a plurality of PNNI networks.
Fig. 19 is a diagram illustrating filtering processing of the public ATM exchange which accommodates a plurality of PNNI networks.
Fig. 20 is a diagram illustrating a setup sequence for establishing a shortcut path in a single PG hierarchy, as a call setup route in a public network.
Fig. 21 is a diagram illustrating a format of a DTL information element.
Fig. 22 is a diagram illustrating a processing flow of production and removal of DTLs.
Fig. 23 is a diagram illustrating a processing flow of production and removal of DTLs.
Fig. 24 is a diagram illustrating a flow of signaling processing in a source-side public ATM exchange.
Fig. 25 is a diagram illustrating the contents of a B-ISUP message.
Fig. 26 is a diagram illustrating the contents of B-ISUP USER/USER INFORMATION PARAMETER.
Fig. 27 is a diagram illustrating a flow of B-ISUP signaling processing.
Fig. 28 is a diagram illustrating a crankback sequence in the case where a shortcut path is established as a call setup route in a public network.
Fig. 29 is a diagram illustrating a flow of a crankback sequence in a destination-side public ATM exchange.
Fig. 30 is a diagram illustrating a flow of a crankback sequence in a source-side public ATM exchange.
Fig. 31 is a diagram illustrating a format of a crankback information element.
Fig. 32 is a diagram illustrating a physical configuration of a network.
Fig. 33 is a diagram illustrating a logical configuration of a network.
Fig. 34 is a diagram illustrating a construction of a public ATM exchange.
Fig. 35 is a diagram illustrating contents of an LS-PG correspondence table.
Fig. 36 is a diagram illustrating contents of an LS-PG correspondence table.
Fig. 37 is a diagram illustrating contents of a destination correspondence table.
Fig. 38 is a diagram illustrating contents of a packet of a response message.
Fig. 39 is a diagram illustrating contents of a packet of a response message.
Fig. 40 is a diagram illustrating contents of a request management table.
Fig. 41 is a diagram illustrating a setup sequence for establishing a shortcut path in a single PG hierarchy, as a call setup route in a public network.
Fig. 42 is a diagram illustrating a flow of signaling processing in a source-side public ATM exchange.
Fig. 43 is a diagram illustrating a processing flow of production and removal of DTLs.
Fig. 44 is a diagram illustrating a flow of ARP message analysis.
Fig. 45 is the diagram illustrating a flow of ARP message analysis.
Fig. 46 is a diagram illustrating a flow of B-ISUP signaling processing in a public ATM exchange.
Fig. 47 is a diagram illustrating a format of DTL PARAMETER.
Fig. 48 is a diagram illustrating a format of DESTINATION SUBADDRESS PARAMETER.
Fig. 49 is a diagram illustrating a format of CRANKBACK PARAMETER.
Fig. 50 is a diagram illustrating a sequence of updating a destination correspondence table when a shortcut path over a plurality of PG hierarchies is used as a call setup route in a public network, and the call setup operation fails.
Fig. 51 is a diagram illustrating an example of a physical configuration of a network in the case where the destination LS resolution server is arranged.
Fig. 52 is a diagram illustrating the function blocks of a destination LS resolution server.
Fig. 53 is a diagram illustrating a flow of processing in a destination LS resolution server.
Fig. 54 is a diagram illustrating contents of an Inverse_ARP message.
Fig. 55 is a diagram illustrating a flow of update of a destination correspondence table in response to a topology state changes.
Fig. 56 is a diagram illustrating a setup sequence for establishing a shortcut path over a plurality of PG hierarchies, as a call setup route in a public network in the case where the destination LS resolution server is arranged.
Fig. 57 is a diagram illustrating an example of a physical configuration of a network in the case where the broadcast server is arranged.
Fig. 58 is a diagram illustrating the function blocks of a broadcast server.
Fig. 59 is a diagram illustrating an operation flow of the broadcast processing means.
Fig. 60 is a diagram illustrating a flow of update of a destination correspondence table in response to a topology state changes.
Fig. 61 is a diagram illustrating a sequence of setting up a call in a public network.
Fig. 62 is a diagram illustrating a flow of B-ISUP signaling processing in a public ATM exchange.
Fig. 63 is a diagram illustrating a flow of ARP message analysis in a public ATM exchange.
Fig. 64 is a diagram illustrating a flow of ARP message analysis in a public ATM exchange.
Figs. 65(A) and 65(B) are diagrams illustrating the conventional modes of connection between ATM-LANs. Fig. 65(A) exhibits a mode of connection between specific ATM-LANs through a PVP, and Fig. 65(B) exhibits a mode of connection between specific ATM-LANs through a RCC using a PVC.

### BEST MODE FOR CARRYING OUT THE INVENTION

The embodiments of the present invention are explained below with reference to the drawings.

Fig. 1 is a diagram illustrating the basic construction of the communication network system 1 according to the present invention. In the communication network system 1, remote ATM-LANs are connected through a public network (B-ISUP network) 2, and communication is conducted between an arbitrary number of sources and an arbitrary number of destinations.

The communication network system 1 comprises the public network 2, the local area networks 21 to 24, and exchanges (line switches in the public network) LS1 to LS4 which respectively connect the local area networks 21 to 24 with the public network 2. In Fig. 1, the local area network 21 includes a private branch exchange P1 and a multimedia terminal 21a, and the local area network 22 includes a private branch exchange P2 and a multimedia terminal 22a. Hereinafter, a multimedia terminal is called a terminal. In addition, the exchanges LS1 to LS4 connect the local area networks 21 to 24 with the public network 2, respectively, and function as interfaces between the local area networks 21 to 24 and the public network 2, so as to form private networks including the exchanges LS1 to LS4 and the local area networks 21 to 24, respectively.

In the explanations provided hereinafter, the private networks are assumed to be PNNI networks. In addition, although only four exchanges LS1 to LS4 are shown in Fig. 1 for the sake of simplicity, in practice an arbitrary number of exchanges can be arranged corresponding to PNNI networks.

In the communication network system 1, the four PNNI networks are connected to the public network 2 through the exchanges LS1 to LS4, respectively, and logical identifiers (peer group identifiers) PG-A.1 to PG-A.4 are assigned to the PNNI networks, respectively. The peer groups (PGs) are logical nodes each representing an aggregation of a plurality of nodes arranged in a hierarchy.

The exchanges LS1 to LS4 belong to the public network 2, and have functions of PNNI processing (PNNI signaling processing and PNNI routing processing) for executing interface processing between the public network 2 and the PNNI networks 21 to 24.

In addition, the exchanges LS1 to LS4 are arranged in a ring topology, so that information for communication is transmitted and received between adjacent ones of the exchanges. For example, the information for communication is information which is necessary for communication, and may be contained in a packet such as a hello packet, which is used for sending topology information or state information indicating an operation state of the source of the hello packet.

Further, the topology information indicating the ring topology of the exchange LS1 to LS4 is initially supplied by a user to the respective exchange LS1 to LS4 through maintenance terminal equipment. Therefore, each of the exchange LS1 in the peer group PG-A.1 and the exchange LS2 in the peer group PG-A.2 recognizes the exchange LS3 in the peer group PG-A.3 and the exchange LS4 in the peer group PG-A.4 as the adjacent exchanges, and each of the exchange LS3 in the peer group PG-A.3 and the exchange LS4 in the peer group PG-A.4 recognizes the exchange LS1 in the peer group PG-A.1 and the exchange LS2 in the peer group PG-A.2 as the adjacent exchanges. Thus, when the exchange LS1 to LS4 are viewed from the PNNI networks, the exchange LS1 to LS4 appear to be arranged in the ring topology.

In the above configuration, each of the exchange LS1 to LS4 sends to and receives from the adjacent exchanges hello packets, which contain information on links obtained from topology information held in each of the exchange LS1 to LS4, information on a state of each of the exchange LS1 to LS4, and the like.

When the exchange LS1 executes signaling processing for setting up a call between different PNNI networks (for example, in response to a request for communication from the terminal 21a in the PNNI network PG-A.1 to the terminal 22a in the PNNI network PG-A.2), the private branch exchange P1 designates as a DTL (i.e., route information which designates a route for a call setup) a route from the exchange LS1 through the exchange LS3 to the exchange LS2 or a route from the exchange LS1 through the exchange LS4 to the exchange LS2, based on the topology information.

When arrangement (e.g., addition, removal, or the like) of an exchange LS is changed, the topology information is set in only exchanges LS which interface with the changed exchange LS. In this case, hello packets are not transmitted between the above exchanges LS, and instead PTSPs (PNNI Topology State Packets) updated with the changed topology information are transmitted between the above exchanges LS, so that the topology information is synchronized between the exchanges LS.

For example, when the exchange LS4 is removed from the configuration of Fig. 1, topology information including the removal of the exchange LS4 is set in the exchange LS1 and the exchange LS2 by a user through maintenance terminal equipment or the like. Thereafter, the exchange LS1 and LS2 automatically exchange PTSPs.

In addition, the private branch exchanges are configured as follows. That is, when a private branch exchange receives a request for communication with a terminal which belongs to a private branch network, the private branch exchange determines route information for a call setup based on topology information, and outputs a call-setup request message which contains the route information.

For example, when the private branch exchange P1 receives a request for communication with the terminal 21a which belongs to a private branch network 21, the private branch exchange P1 determines route information (DTL) for a call setup based on topology information, and outputs a call-setup request message which contains the route information.

Further, in the case where an exchange LS belongs to more than one PNNI network, a recognition table is provided in the exchange LS for recognizing each PNNI network to which the exchange LS belongs. Thus, when the exchange LS receives a routing message during a call setup operation, the exchange LS can recognize a PNNI network from which the routing message is sent to the exchange LS, by referring to the routing message and the recognition table.

Furthermore, a database of topology information which is provided for the recognized PNNI network is updated with information included in the routing message. Hereinafter, a database of topology information is called a topology database.

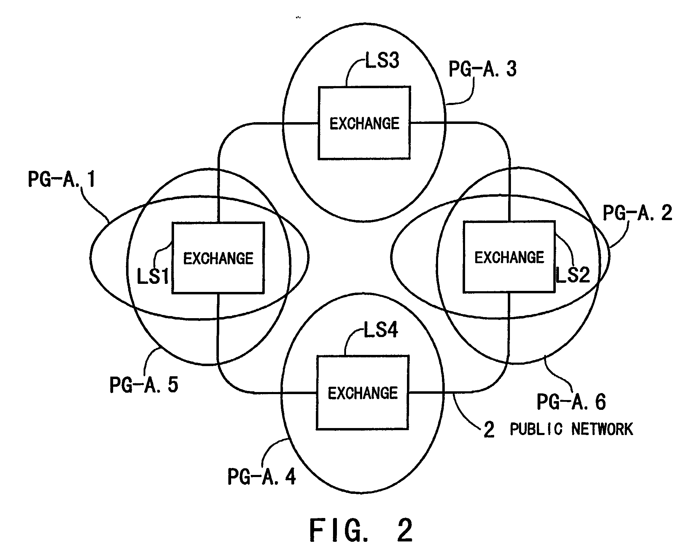

Fig. 2 exhibits a network configuration in an example of the case where an exchange LS belongs to more than one PNNI network. In Fig. 2, the exchange LS1 belongs to two PNNI networks PG-A.1 and PG-A.5, and the exchange LS2 belongs to two PNNI networks PG-A.2 and PG-A.6. In such a network configuration, a recognition table is provided in each of the exchanges LS1 and LS2 for recognizing each PNNI network. Thus, each of the exchanges LS1 and LS2 determines from which PNNI network a received routing message has been sent. In addition, the result of the determination is stored in a database, and the result is referred to in the next operation.

As explained above, in the communication network system 1 according to the present invention, the exchanges LS1 to LS4 have functions of PNNI processing for executing interface processing between the public network 2 and the local area networks 21 to 24, and are arranged in a ring topology in the public network 2.

Due to the above construction, the number of adjacent exchanges LS is reduced, compared with the case where exchanges are interconnected in a mesh form. Therefore, it is possible to reduce the load of the routing processing imposed on the exchange LS and the private branch exchange connected to the exchange LS in the PNNI network.

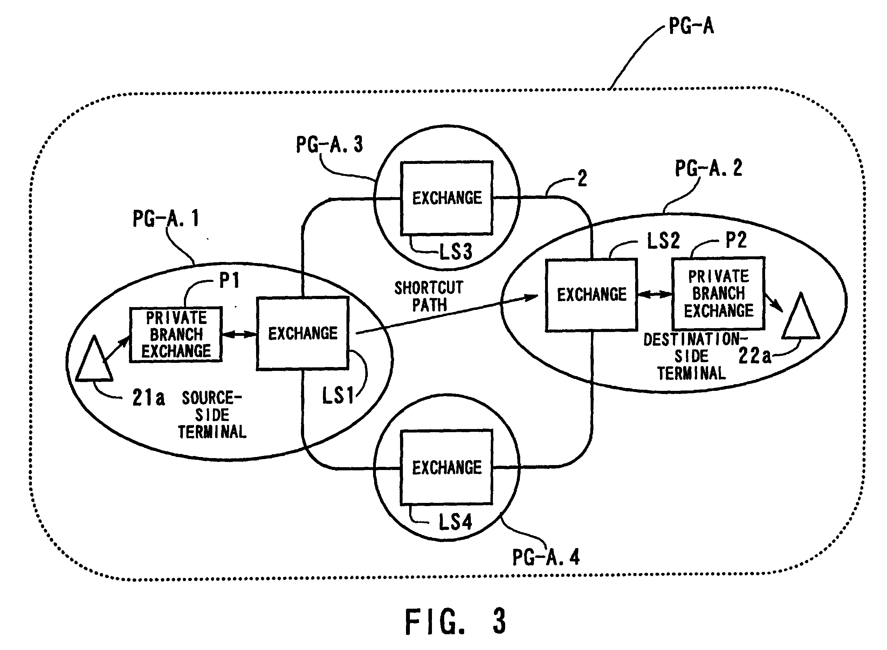

Next, setting of a shortcut path (VC) in a single PG hierarchy is explained below. Fig. 3 is a diagram illustrating the principle of shortcut path setting in a single PG hierarchy. All of the PNNI networks in Fig. 3 belong to a single PG hierarchy PG-A, where "A" denotes the name of the hierarchy level.

When the exchange LS1 executes signaling processing for setting up a call between different PNNI networks (for example, in response to a request for communication from the terminal 21a in the PNNI network PG-A.1 to the terminal 22a in the PNNI network PG-A.2), the exchange LS1 obtains a destination-side exchange LS2 which belongs to a PNNI network located nearest to a destination terminal, based on the designated DTL (i.e., the route from the exchange LS1 through the exchange LS3 to the exchange LS2 or the route from the exchange LS1 through the exchange LS4 to the exchange LS2), and directly sends a message to the destination-side exchange LS2 (i.e., takes a short-cut to the destination-side exchange LS2). This message includes the designated DTL (i.e., the route from the exchange LS1 through the exchange LS3 to the exchange LS2 or the route from the exchange LS1 through the exchange LS4 to the exchange LS2) without change. Since the designated DTL in the message is not changed, the destination-side exchange LS2 is not affected by the selection of the actual route (shortcut path) which does not follow the designated DTL in the public network 2. Therefore, it is possible to use the conventional arrangements for DTLs.

When the destination-side exchange LS2 receives a message that a call setup is impossible, from a destination of a call-setup request message, the destination-side exchange LS2 sends a message that the call setup is impossible, to a source-side exchange LS1 which originates the call-setup request message.

In addition, when a source-side exchange LS1 receives a call-setup request message, the source-side exchange LS1 packs information elements used in a call setup protocol in a local area network (e.g., a DTL information element or an information element indicating that a call setup is impossible) as a new information element or an existing specific information element, in the call-setup request message, and the information elements used in a call setup protocol in a local area network packed in the call-setup request message is extracted by the destination-side exchange LS2.

Further, when the source-side exchange LS1 receives a message that a call setup is impossible, the source-side exchange LS1 determines based on the topology information a new shortcut path which is different from the previous path, and outputs a call-setup request message including new route information.

Instead of the exchange LS, the private branch exchange P1 which originates the call-setup request message can set by itself as a shortcut path a shortest path from the private branch exchange P1 to the nearest destination-side private branch exchange P2 which accommodates the destination terminal 22a.

Furthermore, when a shortcut path is established by an exchange LS which belongs to more than one PNNI network (e.g., when a shortcut path from the exchange LS1 to the exchange LS2 in Fig. 2 is established), a recognition table is provided in the exchange LS for recognizing each PNNI network. Thus, when the exchange LS receives a call-setup request message to a terminal which belongs to a different PNNI network, the exchange LS recognizes the PNNI network by referring to the recognition table, and determines a shortcut path based on a topology database which is provided for the recognized PNNI network.

As explained above, a shortcut path is established in the communication network system 1 according to the present invention. Since the DTL is produced along the ring connection based on topology information, the route designated by the DTL is not necessarily an optimum route in the public network 2. Thus, it is possible to establish an optimum route from the source-side exchange LS to the destination-side exchange LS in the single PG hierarchy by establishing the shortcut path. In addition, the load of the PNNI signaling, which is imposed on the exchange LS, can be reduced.

Further, since the designated DTL is not changed during the operation of establishing the shortcut path, the destination-side exchange LS2 is not affected by the shortcut path. Therefore, the conventional arrangements for the DTL can be used without change.

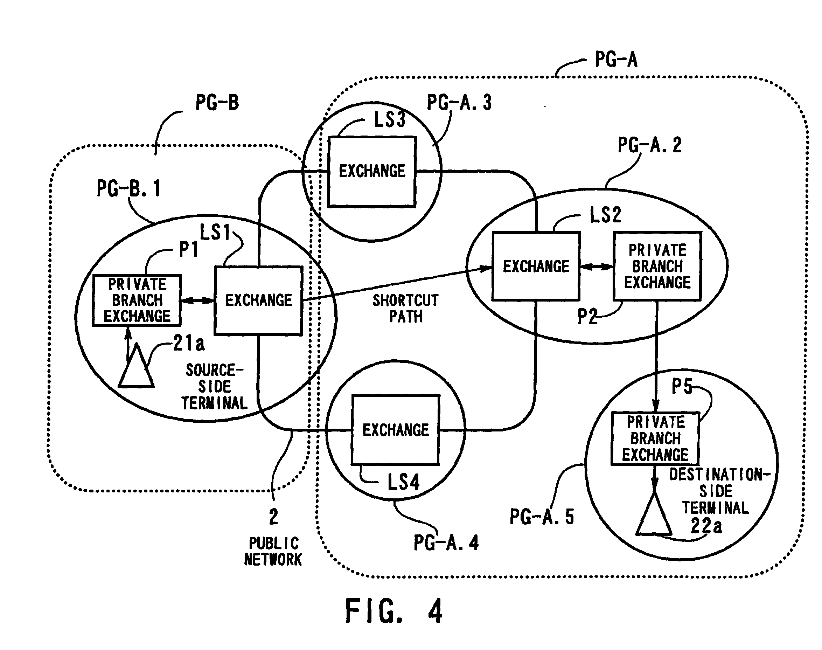

Next, setting of a shortcut path over more than one PG hierarchy is explained below. Fig. 4 is a diagram illustrating the principle of shortcut path setting between different PG hierarchies. The PNNI networks in Fig. 4 belong to different PG hierarchies PG-A and PG-B.

Since the exchange LS1 belongs to PG-B, and the exchanges LS2 to LS4 belong to PG-A, communication between the exchange LS1 and the exchange LS2 is conducted between the different PG hierarchies PG-A and PG-B. Therefore, in this case, the exchange LS1 has to obtain information on the address of the exchange LS2, where the exchange LS1 is a source-side exchange, and the exchanges LS3 and LS4 are relay exchanges.

When the exchange LS1 executes signaling processing for setting up a call between different PNNI networks (for example, in response to a request for communication from the terminal 21a in the PNNI network PG-B.1 to the terminal 22a in the PNNI network PG-A.5), the exchange LS1 sends a call-setup request message to the exchange LS2 through a path based on topology information, so as to obtain the information on the address of the exchange LS2. Then, in response to the call-setup request message, the exchange LS1 receives the information on the address, and sets up a shortcut path.

The information on the address received from the exchange LS2 which accommodates a network to which the destination-side terminal 22a belongs is cached in a table in the exchange LS1. Thereafter, when the exchange LS1 conducts communication with the terminal 22a in PG-A.5, the table is referred to.

In addition, although the exchange LS1 refers to the table in the exchange LS1 when the exchange LS1 sets up a call between different PNNI networks, a call-setup failure message is sent from the exchange LS2 to the exchange LS1 when a call setup fails, for example, due to a change in topology information. When the exchange LS1 receives the call-setup failure message, the exchange LS1 cancels the information on the address which is used in the call setup operation.

Further, when the source-side exchange LS1 receives the information on the address from the destination-side exchange LS2, and a memory area for the table storing the address information is full, the exchange LS1 deletes an old item of the information on the address, and caches a new item in the table.

As explained above, according to the present invention, in order to obtain address information, a shortcut path is established from the source-side exchange LS1 to the destination-side exchange LS2 which belongs to a different PG hierarchy from the PG hierarchy to which the exchange LS1 belongs. Therefore, it is possible to establish an optimum route between the different PG hierarchies in the public network 2.

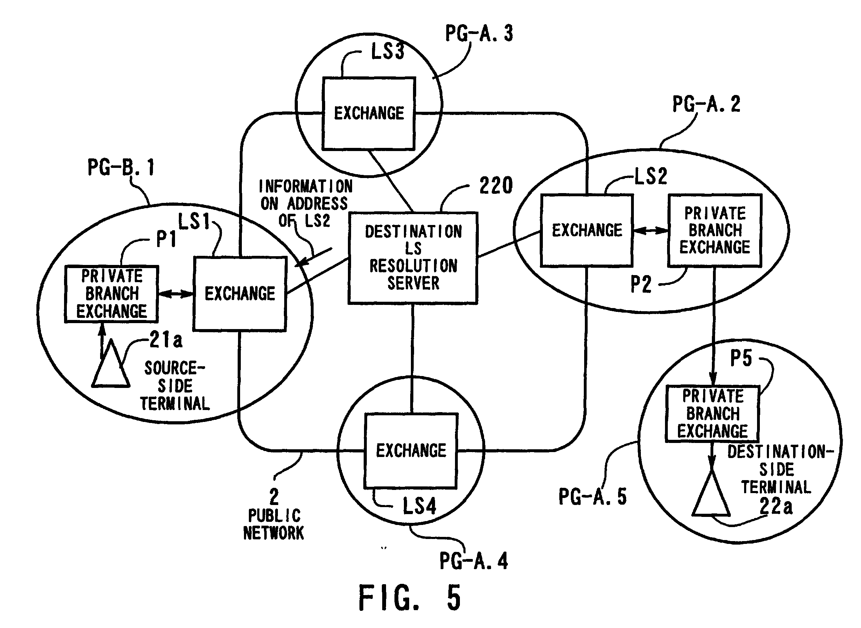

Next, an explanation on a server, which is hereinafter called a destination LS resolution server, is provided below. Fig. 5 is a diagram illustrating the basic construction of a communication network system in which a destination LS resolution server is provided.

In the communication network system of Fig. 5, the destination LS resolution server 220 is arranged in the public network 2. The destination LS resolution server 220 establishes a connection with each of the exchanges LS1 to LS4 in the public network 2.

When the exchange LS1 executes signaling processing for setting up a call between different PNNI networks (for example, in response to a request for communication from the terminal 21a in the PNNI network PG-B.1 to the terminal 22a in the PNNI network PG-A.5), the exchange LS1 sends a request message to the destination LS resolution server 220 for obtaining information on the address of the exchange LS2 accommodating a network to which the destination-side terminal 22a belongs. Then, in response to the request message, the exchange LS1 receives the address information so as to enable a call setup (including setting of a shortcut path) in the public network.

The information on the address which is received from the destination LS resolution server 220 is cached in a table in the exchange LS1. Thereafter, when the exchange LS1 conducts communication with the terminal 22a in PG-A.5, the table is referred to.

Further, when a topology state of a local area network changes, an exchange LS which accommodates the changed local area network detects the change in the topology state, and sends to the destination LS resolution server 220 a change in the table corresponding to the change in the topology state.

As explained above, according to the present invention, the destination LS resolution server 220 is arranged in the public network 2. Therefore, it is not necessary to request the information on the address from the destination-side exchange LS, and it is possible to save time and trouble of topology information analysis which is required for transmission of the request message and the like.

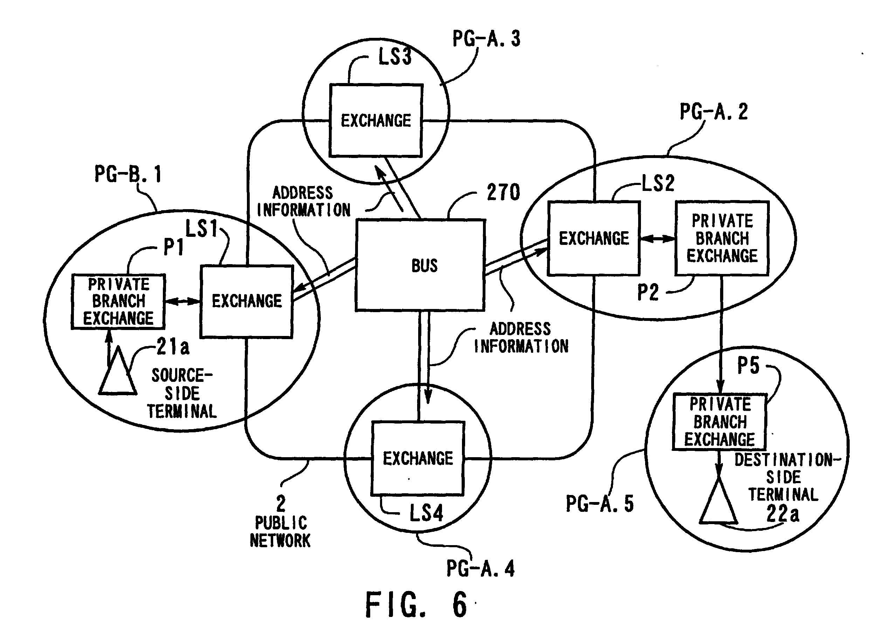

Next, an explanation on a broadcast server is provided below. Fig. 6 is a diagram illustrating the basic construction of a communication network system in which a broadcast server is provided. In the communication network system of Fig. 6, the broadcast server (broadcast and unknown server: BUS) 270 which has a function of broadcasting is arranged in the public network 2. The broadcast server 270 establishes a connection with each of the exchanges LS1 to LS4 in the public network 2.

When the exchange LS1 executes signaling processing for setting up a call between different PNNI networks (for example, in response to a request for communication from the terminal 21a in the PNNI network PG-B.1 to the terminal 22a in the PNNI network PG-A.5), the exchange LS1 refers to a table in the exchange LS1 for obtaining information on the address of the exchange LS2 accommodating a network to which the destination-side terminal 22a belongs. The information on the address is obtained by broadcasting from the broadcast server 270.

When a topology state of a local area network changes, an exchange LS which accommodates the changed local area network detects the change in the topology state, and sends to the broadcast server 270 a change in the table corresponding to the change in the topology state. Then, the broadcast server 270 broadcasts information on the change to the exchanges LS1 to LS4 in the public network 2.

As explained above, according to the present invention, the broadcast server 270 is arranged in the public network 2, and the broadcast server 270 broadcasts a table corresponding to destinations to the exchanges LS in the public network 2. Therefore, the processing of requesting the information on the address from the destination-side exchange LS can be dispensed with, and therefore it is possible to simplify the processing sequence.

Next, other inventions related to acquirement of address information are explained below.

After completion of a call setup operation, the destination-side exchange LS sends to the source-side exchange LS information on the address of the destination-side exchange LS which accommodates a destination terminal. Subsequent call setup operations are performed based on the above information on the address.

When the exchange LS1 executes signaling processing for setting up a call between different PNNI networks (for example, in response to a request for communication from the terminal 21a in the PNNI network PG-B.1 to the terminal 22a in the PNNI network PG-A.5), the exchanges LS are configured so that the public ATM exchange LS1 can obtain information on the address of the exchange LS2 accommodating a network to which the destination-side terminal 22a belongs, from a call-setup completion message sent from the exchange LS2 during the call setup operation.

Although, in the above configuration, a shortcut path is not established in the first call setup operation, the processing sequence of requesting the information on the address can be dispensed with from the second call setup operation. Therefore, it is possible to efficiently establish a shortcut path over different PG hierarchies in the public network 2.

In addition, in order to speed up data transfer, a cache memory is used for caching the above-mentioned information on the address or other information related to communication.

Hereinafter, the constructions and operations of the communication network system 1 are explained in detail.

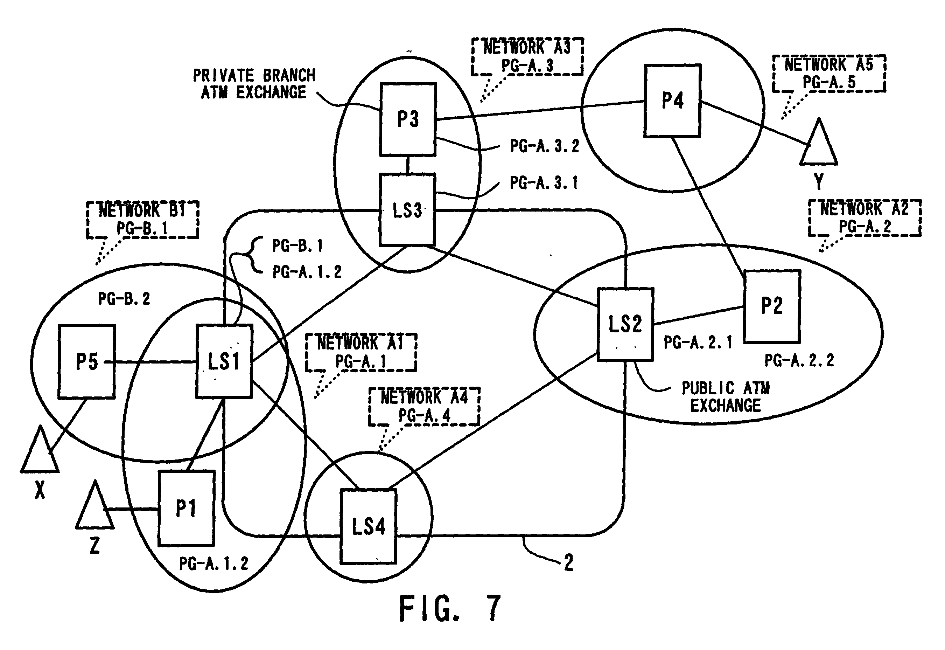

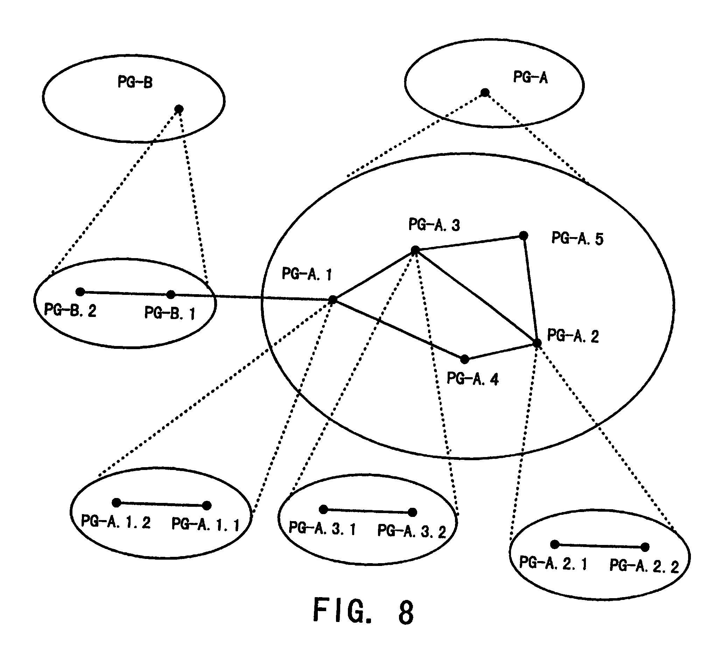

First, the network configuration related to call setup operations is explained below with reference to Figs. 7 and 8. The network of Figs. 7 and 8 comprises a ring connection and a shortcut in a single PG hierarchy. Fig. 7 is a diagram illustrating a physical configuration of a network, and Fig. 8 is a diagram illustrating a logical configuration of the network.

The network of Figs. 7 and 8 comprises a public network 2, a plurality of PNNI networks, a plurality of exchanges LS1 to LS4, and a plurality of private branch exchanges P1 to P5. Hereinafter, the exchanges LS1 to LS4 are assumed to be public ATM exchanges, and the private branch exchanges P1 to P5 are assumed to be private branch ATM exchanges. For the sake of simplicity, ATM exchanges which are not directly related to the transfer path explained below are not shown.

In Fig. 7, PG-A.1 denotes a peer group including a public ATM exchange LS1 and a private branch ATM exchange P1, PG-A.2 denotes a peer group including a public ATM exchange LS2 and a private branch ATM exchange P2, PG-A.3 denotes a peer group including a public ATM exchange LS3 and a private branch ATM exchange P3, PG-A.4 denotes a peer group including a public ATM exchange LS4, PG-A.5 denotes a peer group including a private branch ATM exchange P4, and PG-B denotes a peer group including a public ATM exchange LS1 and a private branch ATM exchange P5.

The public ATM exchange LS1 belongs to the two peer groups PG-A.1 and PG-B.1. Therefore, the peer group identifiers PG-A.1.1 and PG-B.1 are assigned to the public ATM exchange LS1.

In addition, the private branch ATM exchange P5 accommodates the terminal X, the private branch ATM exchange P4 accommodates the terminal Y, and the private branch ATM exchange P1 accommodates the terminal Z.

Further, the network of Figs. 7 and 8 is logically constituted by peer groups formed in three layers, and peer group identifiers are used for identifying the peer groups.

The network A comprises the networks A1 to A5. That is, the five lower-layer peer groups A.1, A.2, A.3, A.4, and A.5 are formed under the peer group A, and the peer group identifiers PG-A.1, PG-A.2, PG-A.3, PG-A.4, PG-A.5, and PG-A are assigned to the peer groups A.1, A.2, A.3, A.4, A.5, and A, respectively.

Furthermore, the peer group PG-A.1 comprises, in a further lower layer, a peer group A.1.1 which is assigned to the public ATM exchange LS1, a peer group A.1.2 which is assigned to the private branch ATM exchange P1, and other peer groups which are assigned to other public ATM exchanges (not shown), where the peer group identifiers PG-A.1.1 and PG-A.1.2 are assigned to the peer groups A.1.1 and A.1.2, respectively.

The peer group PG-A.2 comprises, in a further lower layer, a peer group A.2.1 which is assigned to the public ATM exchange LS2, a peer group A.2.2 which is assigned to the private branch ATM exchange P2, and other peer groups which are assigned to other public ATM exchanges (not shown), where the peer group identifiers PG-A.2.1 and PG-A.2.2 are assigned to the peer groups A.2.1 and A.2.2, respectively.

The peer group PG-A.3 comprises, in a further lower layer, a peer group A.3.1 which is assigned to the public ATM exchange LS3, a peer group A.3.2 which is assigned to the private branch ATM exchange P3, and other peer groups which are assigned to other public ATM exchanges (not shown), where the peer group identifiers PG-A.3.1 and PG-A.3.2 are assigned to the peer groups A.3.1 and A.3.2, respectively.

In addition, in the network B1, the peer group B comprises, in a further lower layer, two peer groups B.1 and B.2, where the peer group identifiers PG-B.1 and PG-B.2 are assigned to the peer groups B.1 and B.2, respectively.

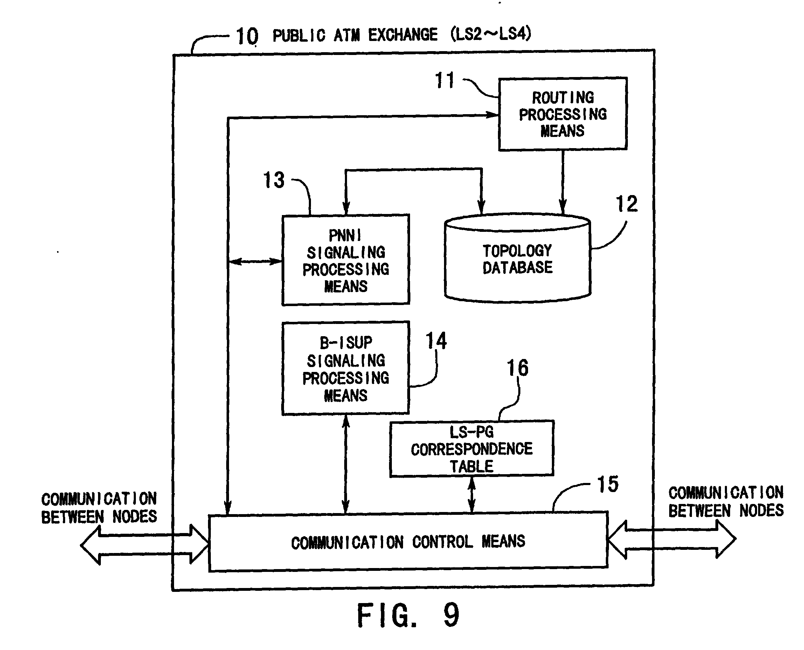

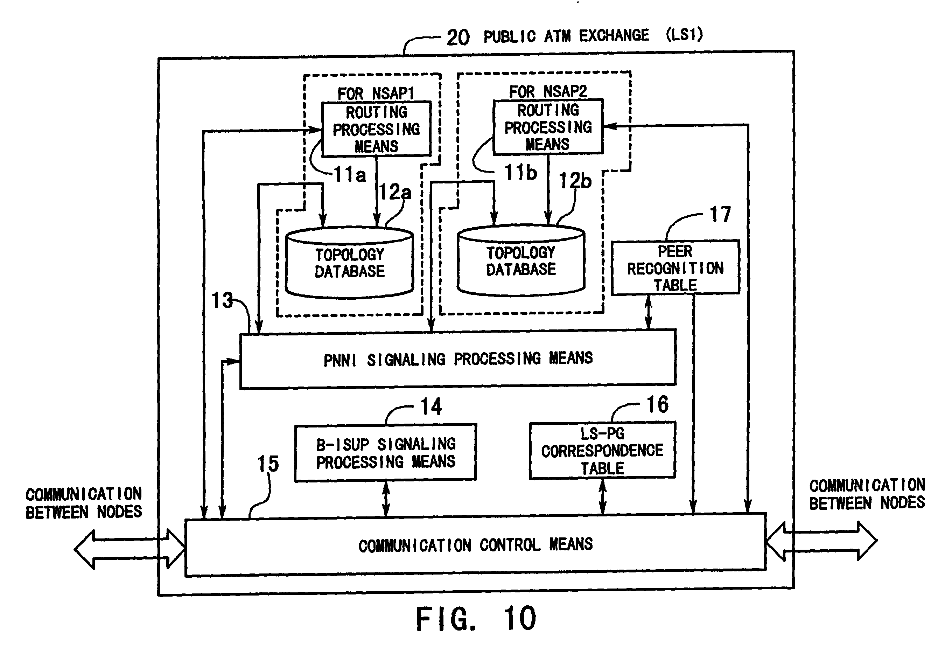

Next, the construction of the public ATM exchange is explained below with reference to Figs. 9 and 10.

Fig. 9 is a block diagram illustrating functions of a public ATM exchange which belongs to a single peer group, and the public ATM exchange of Fig. 9 corresponds to the exchanges LS2 to LS4.

Fig. 10 is a block diagram illustrating functions of a public ATM exchange which belongs to a plurality of peer groups, and the public ATM exchange of Fig. 10 corresponds to the exchange LS1.

The public ATM exchange 10 of Fig. 9, corresponding to exchanges LS2 to LS4, comprises a routing processing means 11 which operates in communication processing in the PNNI networks, a topology database 12, a PNNI signaling processing means 13, and a B-ISUP signaling processing means 14 which operates in communication processing in the public network 2. In addition, a communication control means 15 performs the overall control operation of communications in the PNNI networks and the public network 2, and an LS-PG correspondence table 16 is provided for use in selection of a route for a shortcut path.

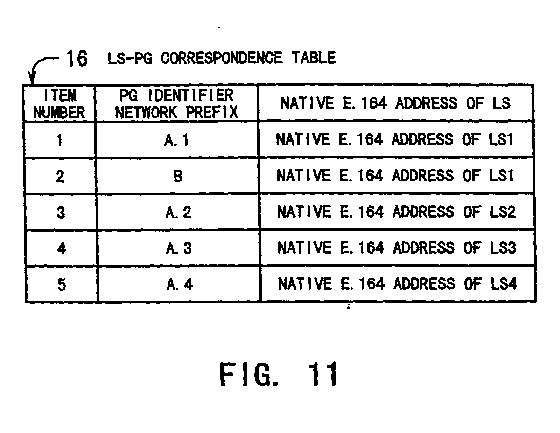

Fig. 11 is a diagram illustrating contents of the LS-PG correspondence table 16. The contents of the LS-PG correspondence table 16 is set by an operation manager of the public network 2.

When a peer group includes a public ATM exchange LS, a native E.164 address of a public ATM exchange LS is recorded corresponding to each peer group identifier (PG identifier network prefix), in the LS-PG correspondence table 16.

In Fig. 11, the native E.164 address of the public ATM exchange LS1 is recorded corresponding to each of the peer group identifiers PG-A.1 and PG-B, since both the peer groups PG-A.1 and PG-B include the common public ATM exchange LS1. Since the peer groups PG-A.2 includes the public ATM exchange LS2, the native E.164 address of the public ATM exchange LS2 is recorded corresponding to the peer group identifier PG-A.2. Since the peer groups PG-A.3 includes the public ATM exchange LS3, the native E.164 address of the public ATM exchange LS3 is recorded corresponding to the peer group identifier PG-A.3. Since the peer groups PG-A.4 includes the public ATM exchange LS4, the native E.164 address of the public ATM exchange LS4 is recorded corresponding to the peer group identifier PG-A.4. Since the peer groups PG-A.5 includes no public ATM exchange, nothing is recorded corresponding to the peer group identifier PG-A.5.

In the construction of the public ATM exchange LS1 illustrated in Fig. 10, the same elements as Fig. 9 have the same reference numbers as Fig. 9. The public ATM exchange 20 in Fig. 10 is different from the public ATM exchange 10 in Fig. 9 in that the routing processing means and the topology database are provided for each of the NSAP (OSI Network Server Access Point) 1 (PNNI network A1) and the NSAP 2 (PNNI network B1). That is, the public ATM exchange 20 in Fig. 10 comprises the routing processing means 11a and the topology database 12a for the NSAP 1 (PNNI network A1), and the routing processing means 11b and the topology database 12b for the NSAP 2 (PNNI network B1).

In the public ATM exchange 20 in Fig. 10, the PNNI signaling processing means 13 is commonly provided for both the NSAP 1 (PNNI network A1) and the NSAP 2 (PNNI network B1).

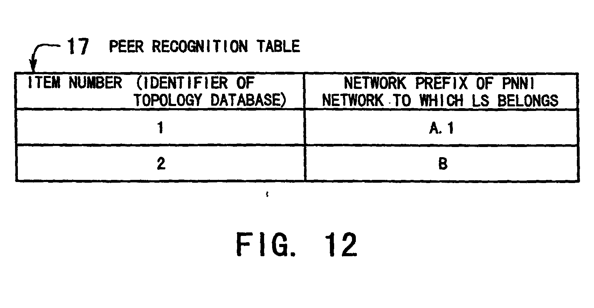

Fig. 12 is a diagram illustrating contents of a peer recognition table. In the peer recognition table 17, item numbers (as identifiers of the topology databases) are recorded corresponding to the peer group identifiers (PGs) of the PNNI networks to which the exchange LS1 belongs. Since the public ATM exchange LS1 belongs to the two PNNI networks A1 and B1, the item number 1 which identifies the topology database 12a is recorded for packets having the peer group identifier PG-A.1, and the item number 2 which identifies the topology database 12b is recorded for packets having the peer group identifier PG-B.

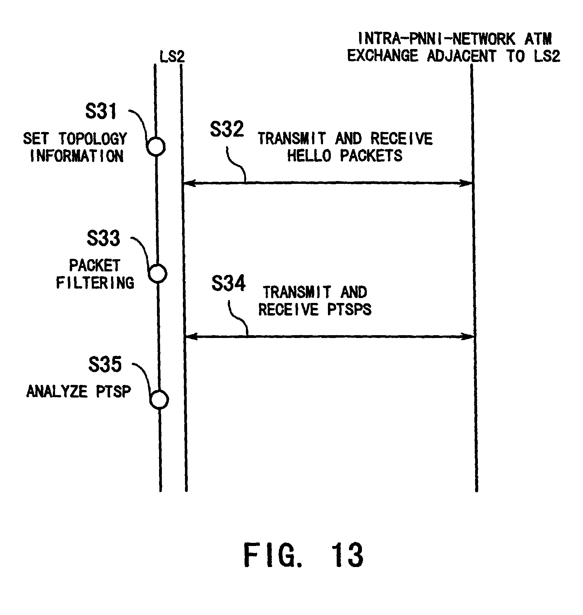

Next, the routing processing in the public ATM exchanges LS2 to LS4 is explained. Fig. 13 is a diagram illustrating a sequence of collecting routing information in a public ATM exchange which belongs to a single PNNI network.

In step S31, the topology information, including link information, state information on the public ATM exchanges LS1 to LS4, and the like, is set in the public ATM exchange LS2 by an operation manager of the public network 2. The link information is provided for the link between LS2 and LS3, the link between LS2 and LS4, the link between LS1 and LS3, and the link between LS1 and LS4, which form the ring connection between the public ATM exchanges terminating the PNNI networks.

The communication control means 15 transfers to the routing processing means 11 information received from the terminal of the operation manager, and the routing processing means 11 sets the above topology information in the topology database 12. Thus, the public ATM exchange LS2 recognizes the public ATM exchanges LS3 and LS4 as public ATM exchanges which are adjacent to the public ATM exchange LS2, and the public ATM exchange LS1 as an public ATM exchange which is not adjacent to the public ATM exchange LS2.

In step S32, the communication control means 15 exchanges hello packets with the adjacent private branch ATM exchange P2 or the like in the PNNI network A2 to which the public ATM exchange LS2 belongs. Thereafter, in step S33, the public ATM exchange LS2 performs packet filtering, i.e., processing of identifying a packet. In step S34, the public ATM exchange LS2 produces PTSEs (PNNI Topology State elements), packs the PTSEs in a PTSP, and exchanges PTSPs with the private branch ATM exchange P2. Then, in step S35, the public ATM exchange LS2 analyzes the PTSP.

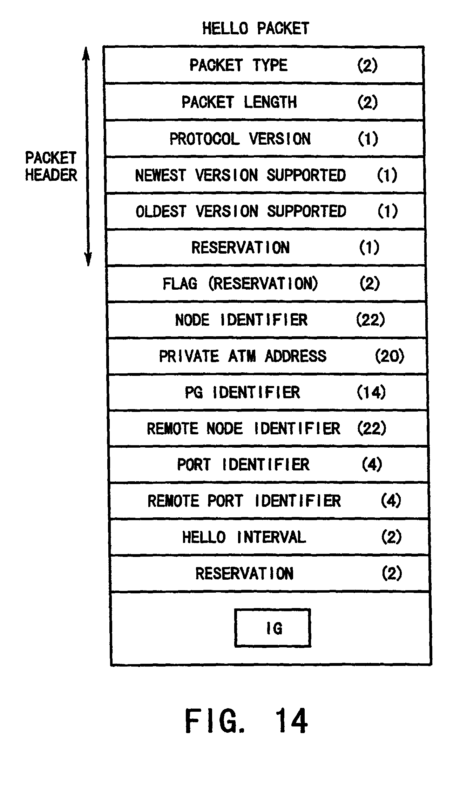

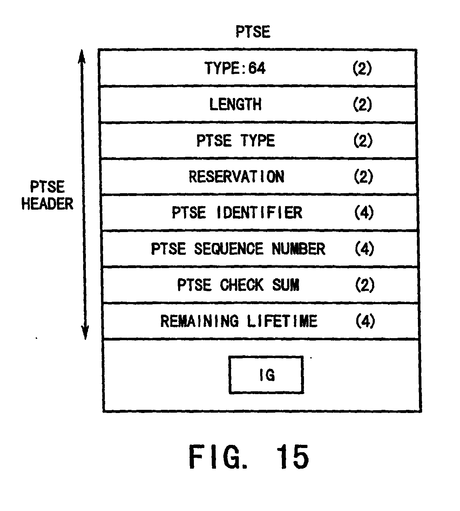

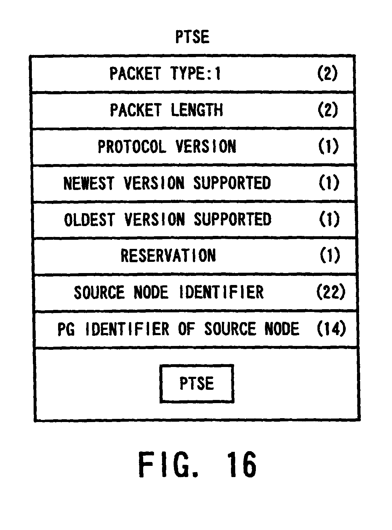

Fig. 14 exhibits a format of a hello packet, Fig. 15 exhibits a format of a PTSE, and Fig. 16 exhibits a format of a PTSP. In Figs. 14 to 16, the numbers in parentheses indicate the numbers of octets.

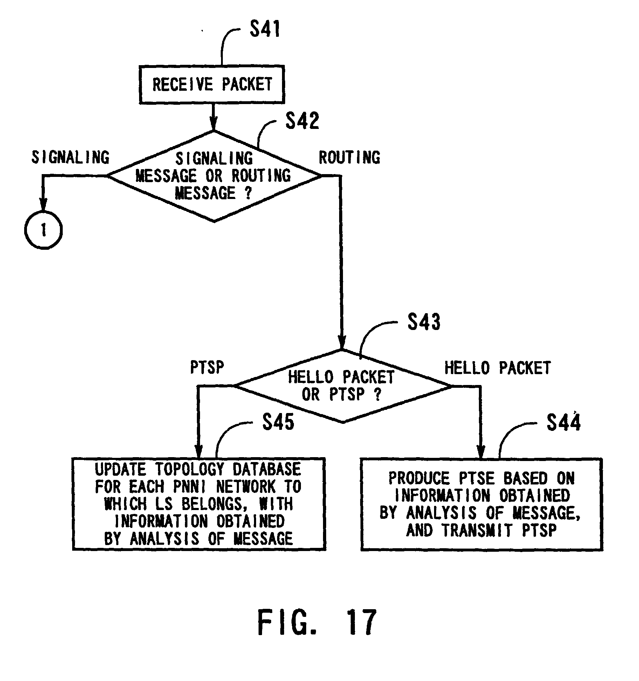

Fig. 17 is a diagram illustrating a flow of processing a message which is performed when the public ATM exchange LS2 receives a packet.

In step S41, the communication control means 15 receives a packet, and determines, in step S42, whether a message contained in the packet is a signaling message or a routing message.

When the packet is a routing message, the routing processing means 11 determines whether the transferred packet is a hello packet or a PTSP in step S43.

When the routing processing means 11 receives a hello packet, the routing processing means 11 analyzes a message contained in the hello packet, and produces PTSEs based on information which is obtained by the analysis and link information between the public ATM exchange LS2 and the adjacent public ATM exchanges which has already obtained. The produced PTSEs are packed in a PTSP in step S44.

Then, the routing processing means 11 instructs the communication control means 15 to send the above PTSP to the respective nodes in the peer group PG-A.2 by flooding, which is a technique of sending the topology information to remote nodes.

When the routing processing means 11 receives a PTSP, the routing processing means 11 analyzes a message contained in the PTSP, and updates the topology database 12 with information obtained by the analysis in step S45.

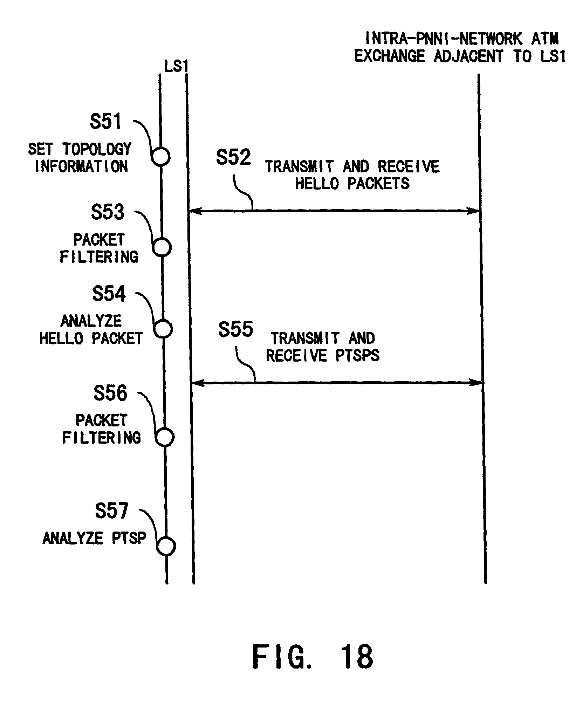

Next, routing processing in the public ATM exchange LS1 is explained below. Fig. 18 is a diagram illustrating a sequence of collecting routing information in a public ATM exchange which belongs to a plurality of PNNI networks.

In step S51, the topology information, including link information, ATM-LAN information on the public ATM exchanges LS1 to LS4, and the like, is set in the public ATM exchange LS1 by an operation manager of the public network 2. The link information is provided for the link between LS2 and LS3, the link between LS2 and LS4, the link between LS1 and LS3, and the link between LS1 and LS4, which form the ring connection between the public ATM exchanges terminating the PNNI networks.

Then, in step S52, the communication control means 15 exchanges hello packets with the adjacent private branch ATM exchange P2 or the like in the PNNI network A2 to which the public ATM exchange LS1 belongs. Thereafter, in steps S53 and S54, the public ATM exchange LS1 performs packet filtering processing, and analyzes the hello packet. In step S55, the public ATM exchange LS1 produces PTSEs (PNNI Topology State elements), packs the PTSEs in a PTSP, and exchanges PTSPs with the private branch ATM exchanges P1 and PG5. Then, the public ATM exchange LS1 performs packet filtering processing, and analyzes the PTSPs (in steps S56 and S57).

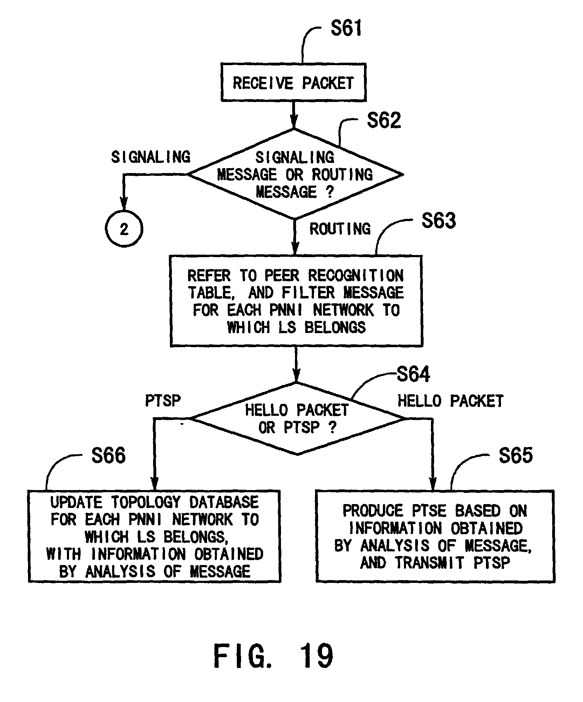

Fig. 19 is a diagram illustrating filtering processing of the public ATM exchange which accommodates a plurality of PNNI networks.

In step S61, the communication control means 15 receives a hello packet from each of the private branch ATM exchanges P1 and P5, and determines, in step S62, whether a message contained in the packet is a signaling message or a routing message.

When the packet is a routing message, filtering processing is executed, i.e., the routing processing means 11 determines from which peer group the received hello packet is received, by referring to the peer recognition table 17, in step S63.

As a result of the filtering processing, a hello packet corresponding to PG-A is transferred to the routing processing means 11a for NSAP1, and a hello packet corresponding to PG-B is transferred to the routing processing means 11b for NSAP2.

In step S64, the routing processing means 11a or 11b determines whether the transferred packet is a hello packet or a PTSP.

In step S65, the routing processing means 11a or 11b analyzes a message contained in the hello packet, and produces PTSEs based on information which is obtained by the analysis and link information between the public ATM exchange LS1 and the adjacent public ATM exchanges which has already obtained. The produced PTSEs are packed in a PTSP.

Then, the routing processing means 11a or 11b instructs the communication control means 15 to send the PTSP to the respective nodes in the peer group PG-A or PG-B by flooding.

In step S66, the routing processing means 11a or 11b analyzes a message contained in the PTSP, and updates the topology database 12 with information obtained by the analysis.

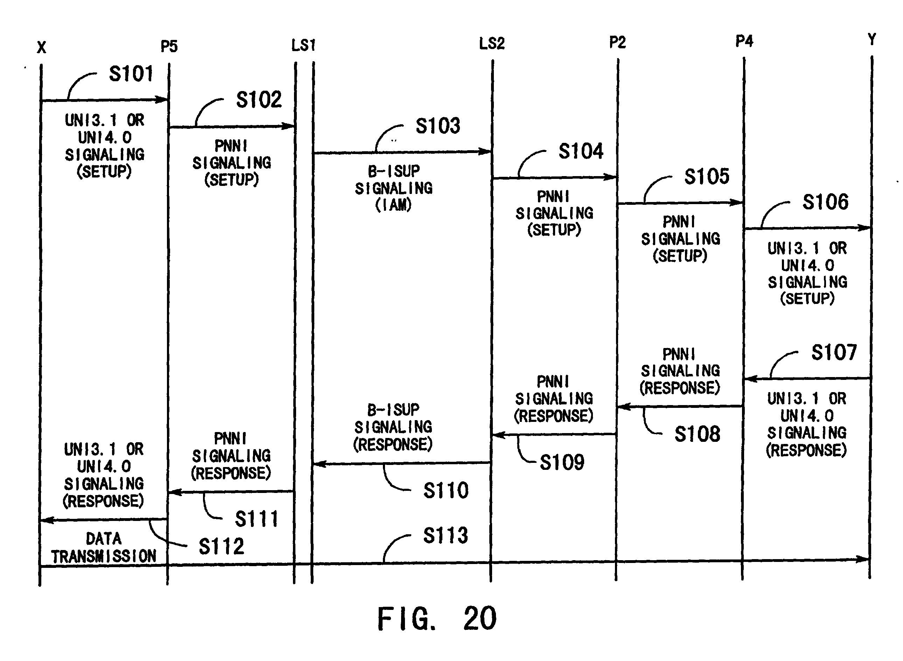

Next, signaling processing is explained below with reference to Figs. 20 to 27. The following explanations are provided for the case where the terminal X accommodated by the peer group PG-B.2 is PNNI-connected with the terminal Y, which is accommodated by the peer group PG-A.5 through the public network 2, as illustrated in Fig. 7.

Fig. 20 is a diagram illustrating a setup sequence for establishing a shortcut path in a single PG hierarchy, as a call setup route in a public network.

In step S101, the terminal X sends to the private branch ATM exchange P5 a UNI (UNI3.1 or UNI4.0) signaling message (SETUP) which contains information indicating the terminal Y as a destination.

When the private branch ATM exchange P5 receives the UNI signaling message (SETUP), the private branch ATM exchange P5 refers to the topology database to select an optimum route to the peer group to which the destination belongs, and produces DTLs of the optimum route from its own node PG-B.1 to PG-A, for a call setup, where the optimum route is determined based on, for example, consideration of distance information, states of congestion of links, and the like.

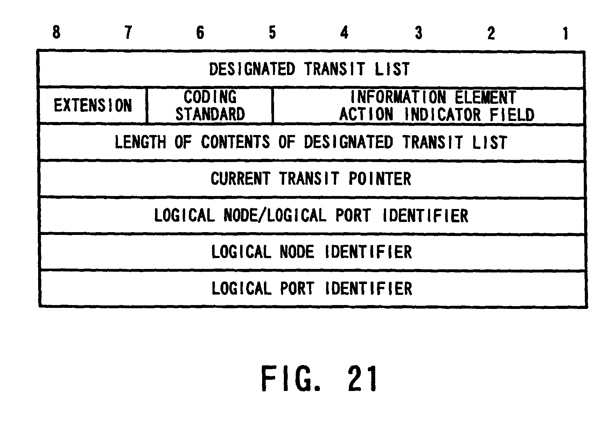

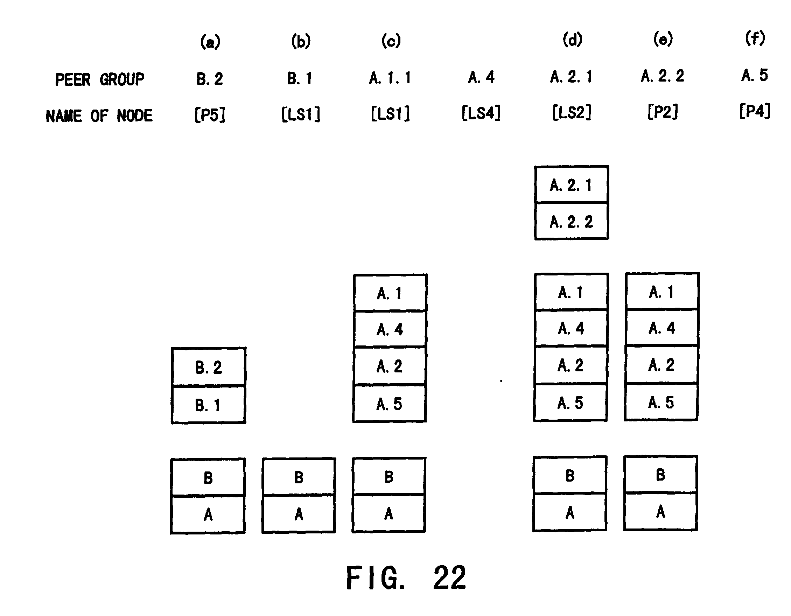

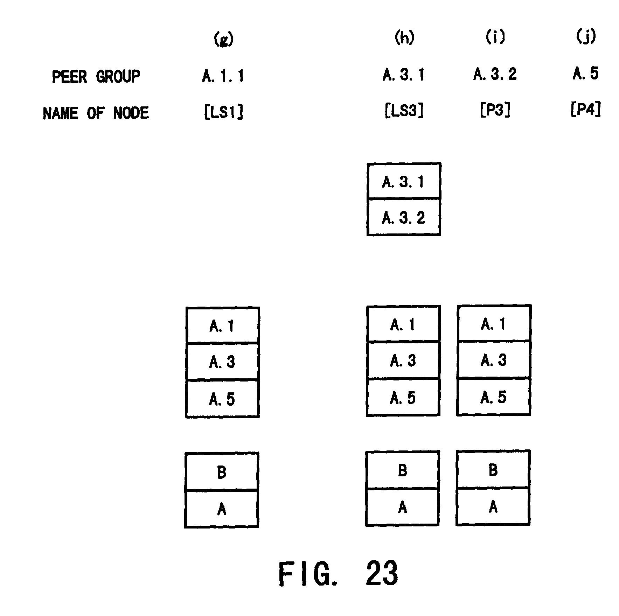

Fig. 21 is a diagram illustrating a format of a DTL information element. That is, the DTL (Designated Transit List) information element is an information element for designating a route of a call setup, and has a format as illustrated in Fig. 21. In addition, Figs. 22 and 23 are diagrams illustrating processing flows of production and removal of DTLs. As illustrated in stage (a) of Fig. 22, a level 1 DTL (PG-B -> PG-A) and a level-2 DTL (PG-B.2 -> PG-B.1) in the peer group PG-B are produced, and the transit points are set in PG-B at level 1, and in PG-B.2 at level 2.

In step S102, the private branch ATM exchange P5 sends a PNNI signaling message containing the above DTLs for the call setup, to public ATM exchange LS1 which belongs to the peer group PG-B.1, in accordance with the DTL.

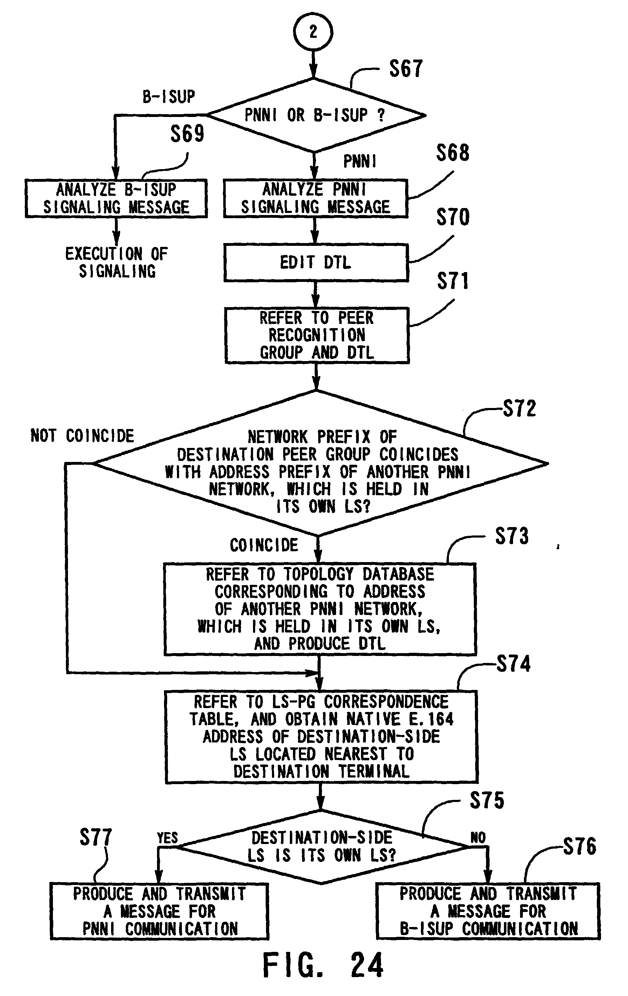

Fig. 24 is a diagram illustrating a flow of signaling processing in a source-side public ATM exchange LS1. In step S67, the public ATM exchange LS1 determines whether the received packet is a PNNI packet or a B-ISUP packet.

When the received packet is a PNNI packet, the PNNI signal processing means 13 analyzes the DTLs in step S68, and deletes the DTL at level 2 in step S70 (as illustrated in stage (b) of Fig. 22) since the packet exits from the peer group PG-B.

In step S71, the public ATM exchange LS1 refers to the peer recognition table 17, and determines, in step S72, whether or not the peer group identifier of the destination coincides with the peer group identifier of the other peer group to which the node of the public ATM exchange LS1 belongs. Since, in this example, the peer group identifier PG-A of the destination coincides with the peer group identifier PG-A.1 of the other peer group to which the node of the public ATM exchange LS1 belongs, the public ATM exchange LS1 refers to the topology database 12a corresponding to the address in the PNNI network A1 to which the public ATM exchange LS1 belongs, additionally produces a level-2 DTL (PG-A.1 -> PG-A.2 -> PG-A.5) for the call setup in the peer group PG-A, and sets the pointer in PG-A, as illustrated in stage (c) of Fig. 22, in step S73.

In step S74, the PNNI signaling processing means 13 refers to the LS-PG correspondence table 16 to obtain a native E.164 address of a destination-side public ATM exchange LS which is located nearest to the destination. At this time, although the peer group PG-A.5 is considered to be the first candidate for the nearest destination-side peer group, no public ATM exchange LS exists in the peer group PG-A.5. Therefore, the next nearest peer group PG-A.2 is considered to be the second candidate. Since the peer group PG-A.2 is listed in the LS-PG correspondence table 16, the public ATM exchange LS1 acquires the native E.164 address of the public ATM exchange LS2 in the peer group PG-A.2, from the LS-PG correspondence table 16.

As described above, in order to obtain a destination-side public ATM exchange LS as an end node of a shortcut path, the public ATM exchange LS1 checks the peer groups included in the DTL (PG-A.1 -> PG-A.4 -> PG-A.2 -> PG-A.5) in the peer group PG-A, in turn from the peer group nearest to the destination terminal, to determine whether each peer group includes a public ATM exchange LS.

In step S75, the public ATM exchange LS1 determines whether or not the public ATM exchange LS1 is the destination-side public ATM exchange. Since, in this example, the destination-side public ATM exchange obtained as the end node of the shortcut path is not the public ATM exchange LS1, the PNNI signaling processing means 13 instructs the B-ISUP signaling processing means 14 to perform B-ISUP signaling processing for the call setup.

In steps S76 and S103, the B-ISUP signaling processing means 14 produces a B-ISUP initial address message (B-ISUP IAM message), which is a B-ISUP communication message directed to the native E.164 address of the public ATM exchange LS2. Then, the B-ISUP signaling processing means 14 inserts the DTL information and the destination NSAP address for transmission in the PNNI networks, in the fields of PNNI USER/USER INFORMATION ELEMENT in the format of B-ISUP USER/USER INFORMATION ELEMENT, and transmits the B-ISUP initial address message (IAM) to the public network 2.

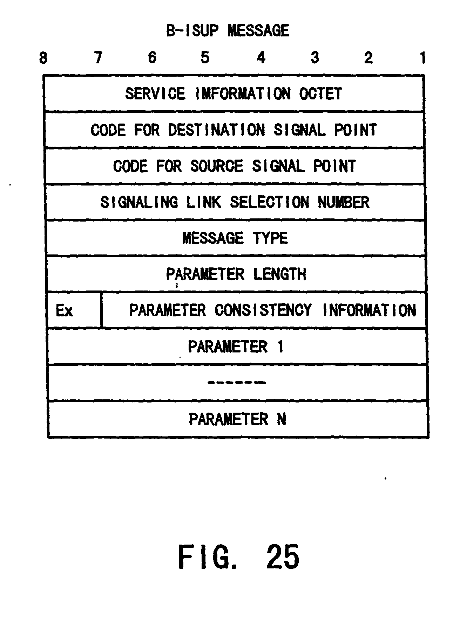

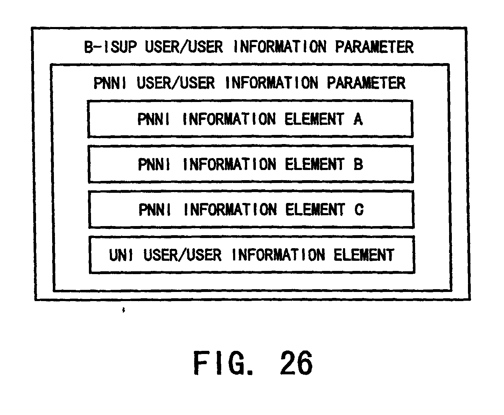

The contents of the B-ISUP message and the contents of the B-ISUP USER/USER INFORMATION PARAMETER are indicated in Figs. 25 and 26, respectively.

When it is determined, in step S72, that the peer group identifier of the destination coincides with the peer group identifier of the other peer group to which the node of the public ATM exchange LS1 belongs (e.g., in the communication from the terminal X to te terminal Z which is accommodated by the private branch ATM exchange P1 belonging to the peer group PG-A.1.2), the PNNI signaling processing means 13 transmits a message for PNNI communication, to a local area network by the PNNI signaling means, in step S77.

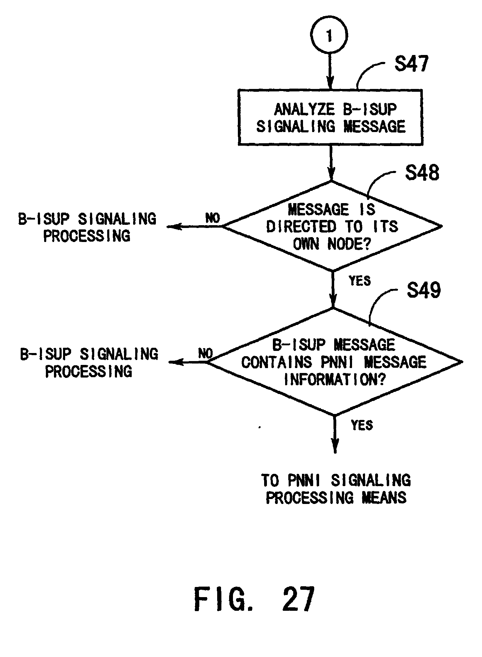

Fig. 27 is a diagram illustrating a flow of B-ISUP signaling processing.

When the received B-ISUP IAM message is determined to be a signaling message in step S42 in Fig. 17, the communication control means 15 in the public ATM exchange LS2 transfers the message to the B-ISUP signaling processing means 14.

The B-ISUP signaling processing means 14 analyzes the B-ISUP IAM message in step S47, and determines, in step S48, whether or not the B-ISUP IAM message is directed to the node to which the B-ISUP signaling processing means 14 belongs. Since, in this example, the B-ISUP IAM message is directed to the node of the public ATM exchange LS2, and contains a PNNI message, the B-ISUP IAM message is transferred to the PNNI signaling processing means 13.

The PNNI signaling processing means 13 in the public ATM exchange LS2 receives the B-ISUP IAM message from the B-ISUP signaling processing means 14, analyzes the PNNI message included in the B-ISUP IAM message, additionally produces a level-3 DTL (PG-A.2.1 -> PG-A.2.2) for a call setup in the peer group PG-A.2 as illustrated in stage (d) of Fig. 22, and sets a transit pointer in PG-A.2.

Then, in step S104, the public ATM exchange LS2 packs the DTLs in a PNNI signaling message (SETUP), and sends the PNNI signaling message (SETUP) to the private branch ATM exchange P2.

The private branch ATM exchange P2 receives the PNNI signaling message (SETUP), and analyzes the DTLs. Since the result of the DTL analysis indicates that the message exits from the peer group PG-A.2, the private branch ATM exchange P2 deletes the level-3 DTL from the DTLs, and sends the SETUP message to the private branch ATM exchange P4 in the PNNI network in step S105.

When the private branch ATM exchange P4 receives the SETUP message, the private branch ATM exchange P4 sends a UNI signaling message (SETUP) to the terminal Y in accordance with the SETUP message in step S106.

The response message from the terminal Y is transmitted through the route of the SETUP message in steps S107 to S112. Thus, a communication path is established between the terminals X and Y through the public network 2 in step S113.

Although, in the above example, a shortcut path is established by referring to the LS-PG correspondence table 16, and obtaining a destination-side public ATM exchange LS nearest to the destination, it is possible to transfer the message through the route in accordance with the DTL, without the use of the LS-PG correspondence table 16. For example, in the network of Fig. 7, the message can be transferred through the route of LS1 -> LS4 -> LS2.

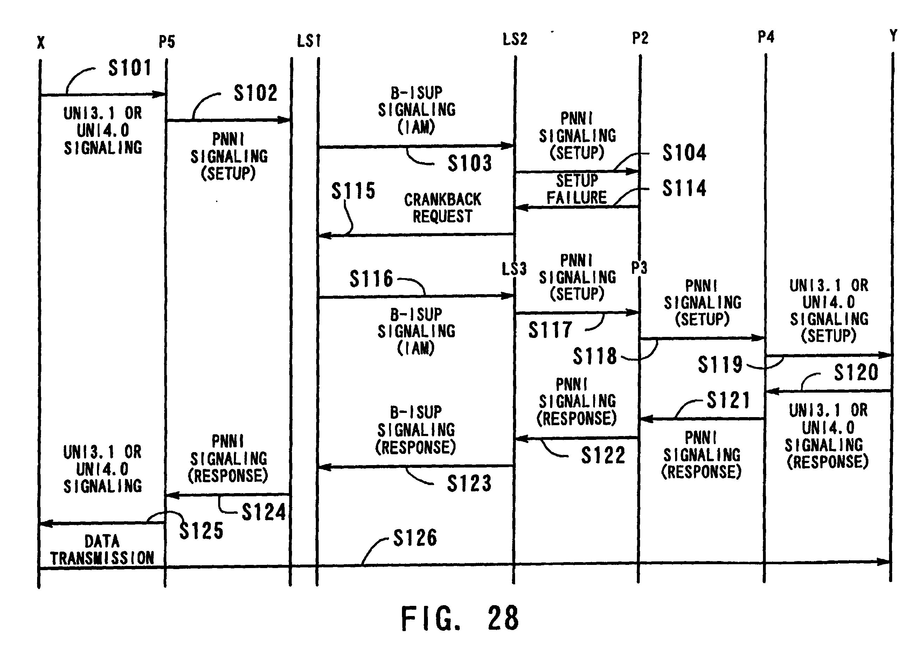

Next, the crankback processing is explained below with reference to Figs. 28 to 31. The crankback is a technique which is employed when blocking occurs, i.e., a call setup is rejected, at a node on an original route of the call setup. When blocking occurs, the operation goes back to a node located on the source node, and an attempt of a call setup through an alternate route is made.

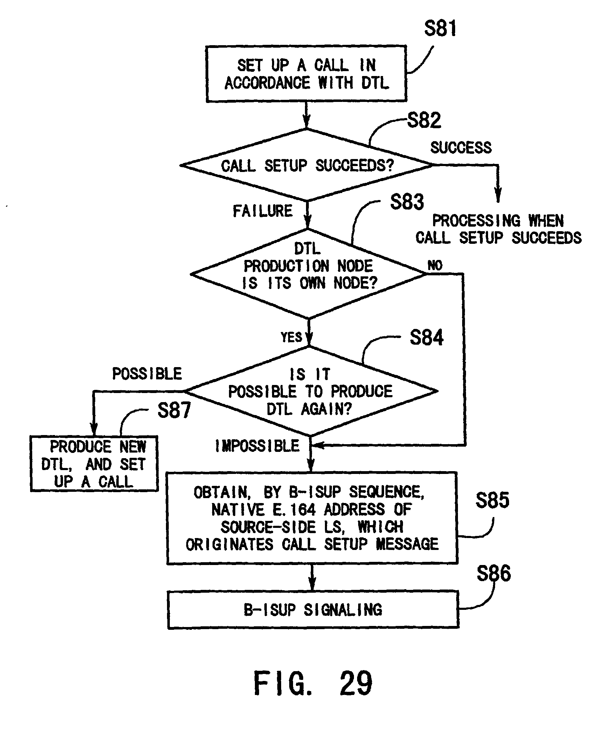

Fig. 28 is a diagram illustrating a crankback sequence in the case where a shortcut path is established as a call setup route in a public network, and Fig. 29 is a diagram illustrating a flow of a crankback sequence in a destination-side public ATM exchange. The following explanations are provided for a SETUP sequence in the case where crankback occurs during a call setup operation from the terminal X included in the peer group PG-B.2 to the terminal Y included in the peer group PG-A.5 in the network of Fig. 7.

In step S81, a PNNI signaling message (SETUP) is sent from the public ATM exchange LS2 to the private branch ATM exchange P2, and an attempt of a call setup is made based on DTLs (in the stage (d) of Fig. 22) which are edited by the public ATM exchange LS2. However, when the PNNI signaling message (SETUP) is rejected by the private branch ATM exchange P2, a crankback request occurs at the destination-side public ATM exchange LS2 in the peer group PG-A.2.

When the PNNI signaling processing means 13 in the public ATM exchange LS2 receives a crankback message in step S114, and recognizes, in step S82, that the call setup operation fails, the PNNI signaling processing means 13 determines, in step S83, whether or not the node to which the PNNI signaling processing means 13 belongs is the node which has produced the DTLs.

When the node to which the PNNI signaling processing means 13 belongs is the node which has produced the DTLs, the PNNI signaling processing means 13 attempts to produce new optimum DTLs which are different from the previous DTLs (in step S84).

When it is possible to produce the new DTLs, a call setup operation is performed based on the new DTLs in step S87.

Since, in this example, no alternate path to the private branch ATM exchange P2 exists, it is not possible to produce the new DTLs. Therefore, the public ATM exchange LS2 acquires the native E.164 address of the source-side public ATM exchange LS1 through a B-ISUP sequence in step S85, and sends a crankback request to the source-side public ATM exchange LS1 by B-ISUP signaling in steps S86 and S115.

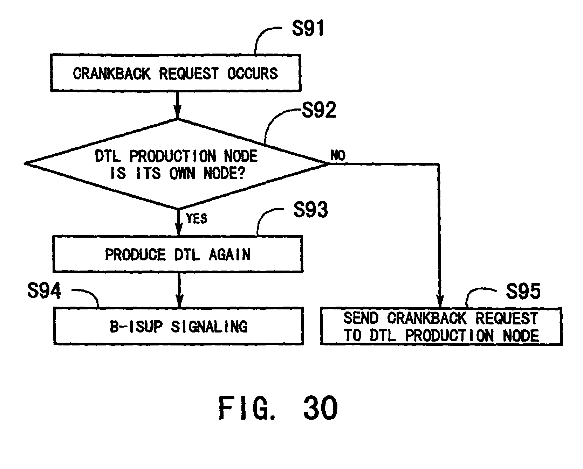

Fig. 30 is a diagram illustrating a flow of a crankback sequence in a source-side public ATM exchange LS1.

When the B-ISUP signaling message contains a PNNI signaling message, the B-ISUP signaling processing means 14 in the public ATM exchange LS1 outputs the PNNI signaling message to the PNNI signaling processing means 13. When the PNNI signaling processing means 13 recognizes the crankback request in step S91, the PNNI signaling processing means 13 determines, in step S92, whether or not the node to which the PNNI signaling processing means 13 belongs is the node which has produced the DTLs.

Since, in this example, the node to which the PNNI signaling processing means 13 belongs is the node which has produced the DTLs, in step S93, the PNNI signaling processing means 13 produces, based on the topology database held in the public ATM exchange LS1, new optimum DTLs (PG-A.1 -> PG-A.3 -> PG-A.5) as illustrated in stage (g) of Fig. 23.

When the node to which the PNNI signaling processing means 13 belongs is not the node which has produced the DTLs, the PNNI signaling processing means 13 sends the crankback request to the node which has produced the DTLs in step S95.

Then, the PNNI signaling processing means 13 in the public ATM exchange LS1 refers to the produced DTLs, and extracts the address of the destination-side public ATM exchange LS3 located nearest to the destination terminal Y by referring to the LS-PG correspondence table 16. Since, in this example, the destination-side public ATM exchange LS3 located nearest to the destination terminal Y is different from the public ATM exchange LS1 to which the PNNI signaling processing means 13 belongs, the B-ISUP signaling processing means 14 executes B-ISUP signaling processing.

In steps S94 and S116, the B-ISUP signaling processing means 14 of the public ATM exchange LS1 sends a B-ISUP IAM message to the native E.164 address of the public ATM exchange LS3. At this time, the B-ISUP signaling processing means 14 inserts the DTL information and the destination NSAP address for transmission in the PNNI networks, in the fields of PNNI USER/USER INFORMATION ELEMENT in the format of B-ISUP USER/USER INFORMATION ELEMENT.

When the public ATM exchange LS3 receives the B-ISUP IAM message, the public ATM exchange LS3 produces DTLs for communication in the peer group PG-A.3, packs the produced DTLs in a PNNI SETUP message, and sends the PNNI SETUP message to the private branch ATM exchange P3 in step S117.

When the private branch ATM exchange P3 receives the PNNI SETUP message, the private branch ATM exchange P3 sends the PNNI SETUP message to the private branch ATM exchange P4, in accordance with the message, in step S118.

When the private branch ATM exchange P4 receives the PNNI SETUP message, the private branch ATM exchange P4 sends an NNI signaling message to the destination terminal Y, in accordance with the message, in step S119.

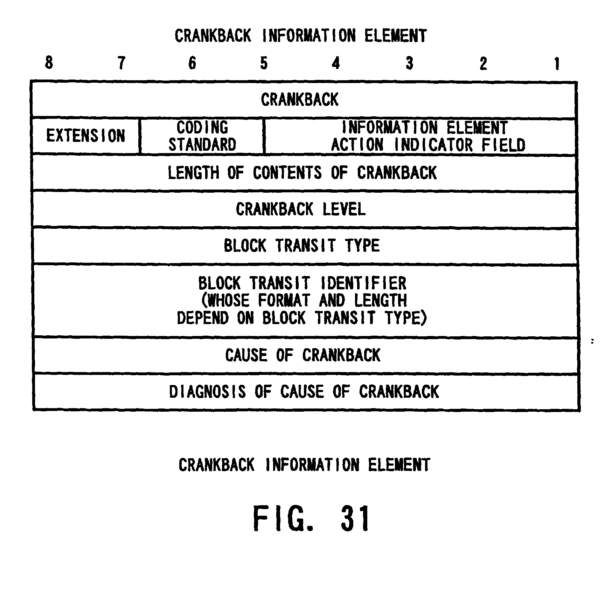

Thereafter, a response message is transmitted through the route of the SETUP message in steps S120 to S125, and thus a path is established between the terminals X and Y in step S126. A format of a crankback information element is illustrated in Fig. 31.

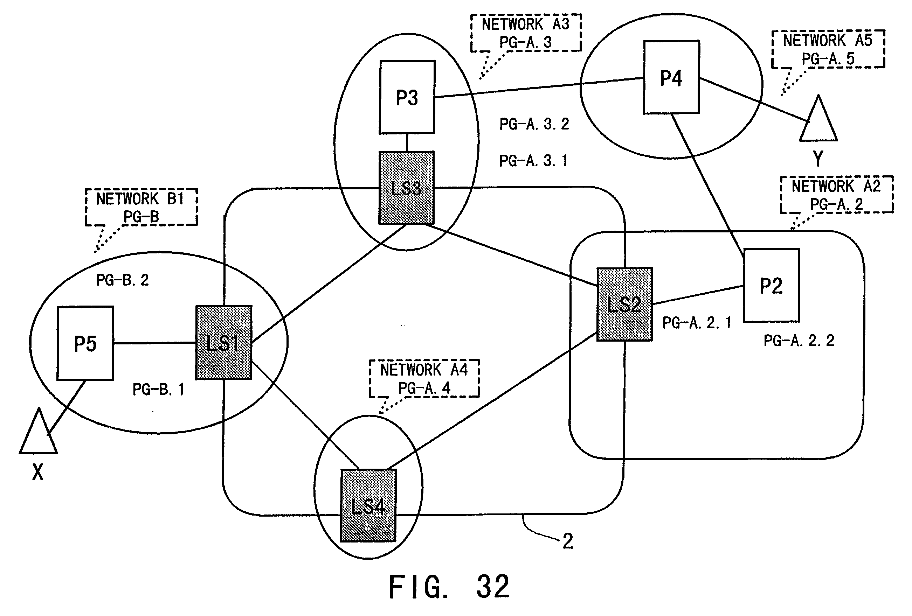

Next, a call setup operation using a shortcut between different PG hierarchies is explained. Fig. 32 is a diagram illustrating a physical configuration of a network.

The network of Fig. 32 comprises a public network 2, a plurality of PNNI networks, public ATM exchanges LS1 to LS4, and a plurality of private branch ATM exchanges P2 to P5, where the public ATM exchanges LS1 to LS4 are arranged in a ring topology, and the public ATM exchange LS1 belongs to a different peer group from the peer groups to which the public ATM exchanges LS2 to LS4 belong. For the sake of simplicity, ATM exchanges which are not directly related to the transfer path explained below are not shown.

In Fig. 32, PG-A.2 denotes a peer group including a public ATM exchange LS2 and a private branch ATM exchange P2, PG-A.3 denotes a peer group including a public ATM exchange LS3 and a private branch ATM exchange P3, PG-A.4 denotes a peer group including a public ATM exchange LS4, PG-A.5 denotes a peer group including a private branch ATM exchange P4, and PG-B.1 denotes a peer group including a public ATM exchange LS1 and a private branch ATM exchange P5. In addition, the private branch ATM exchange P5 accommodates a terminal X, and the private branch ATM exchange P4 accommodates a terminal Y.

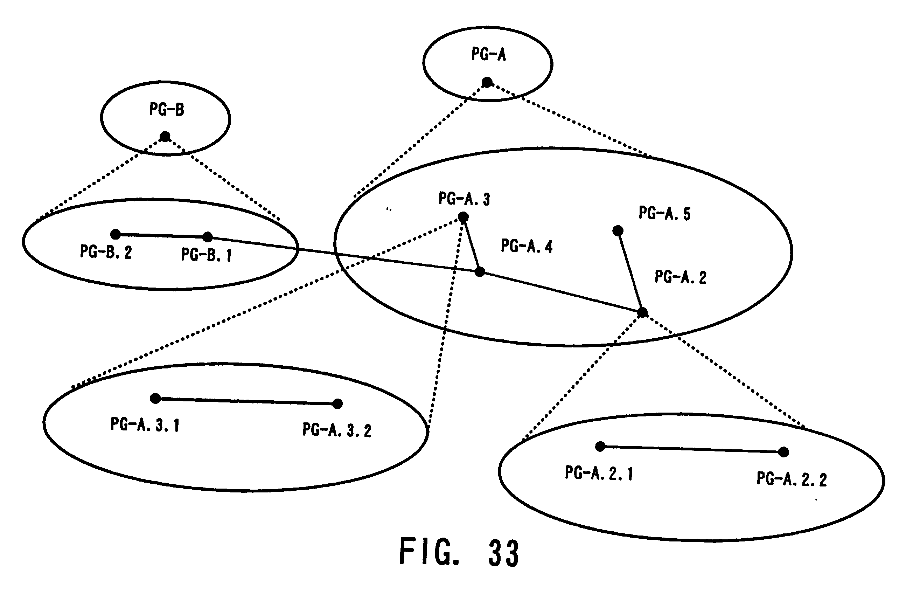

Fig. 33 is a diagram illustrating a logical configuration of the above network. As illustrated in Fig. 33, the network of Fig. 33 is logically constituted by peer groups formed in three layers, and peer group identifiers are used for identifying the peer groups.

The peer group A comprises the four lower-layer peer groups A.2, A.3, A.4, and A.5, and the peer group identifiers PG-A.2, PG-A.3, PG-A.4, and PG-A.5 are assigned to the lower-layer peer groups A.2, A.3, A.4, and A.5, respectively.

In addition, the peer group PG-A.2 comprises, in a further lower layer, a peer group A.2.1 which is assigned to the public ATM exchange LS2, and a peer group A.2.2 which is assigned to the private branch ATM exchange P2, where the peer group identifiers PG-A.2.1 and PG-A.2.2 are assigned to the peer groups A.2.1 and A.2.2, respectively.

The peer group PG-A.3 comprises, in a further lower layer, a peer group A.3.1 which is assigned to the public ATM exchange LS3, and a peer group A.3.2 which is assigned to the private branch ATM exchange P3, where the peer group identifiers PG-A.3.1 and PG-A.3.2 are assigned to the peer groups A.3.1 and A.3.2, respectively.

In addition, the peer group B comprises, in a further lower layer, two peer groups B.1 and B.2, where the peer group identifiers PG-B.1 and PG-B.2 are assigned to the peer groups B.1 and B.2, respectively.

In the network of Fig. 33, only one PNNI logical virtual link exists between the peer groups PG-B and PG-A. That is, the PNNI logical virtual link is provided between the public ATM exchanges LS1 and LS4, i.e., between the peer groups PG-B.1 and PG-A.4, and communication between the peer groups PG-A and PG-B must be conducted through the PNNI logical virtual link.

Next, the constructions of the public ATM exchanges are explained below.

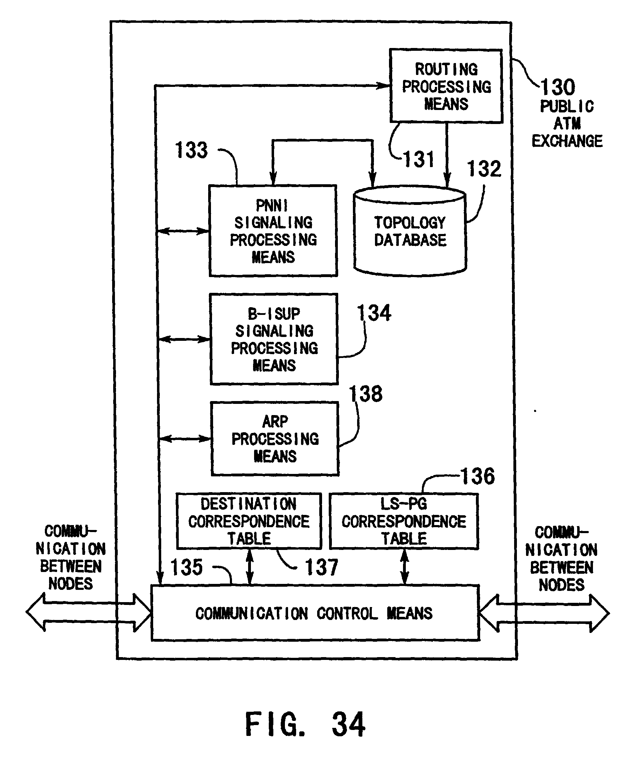

Fig. 34 is a block diagram illustrating functions of a public ATM exchange which belongs to a single peer group, and the public ATM exchange of Fig. 34 corresponds to the exchanges LS1 to LS4.

The public ATM exchange 130 illustrated in Fig. 34 comprises a routing processing means 131 which operates in communication processing in the PNNI networks, a topology database 132, a PNNI signaling processing means 133, and a B-ISUP signaling processing means 134 which operates in communication processing in the public network 2.

In addition, an ARP (address resolution protocol) processing means 138 executes processing of an address resolution protocol, which is explained later.

Further, a communication control means 135 performs the overall control operation of communications in the PNNI networks and the public network 2, and an LS-PG correspondence table 136 is provided, in the exchanges LS which accommodate local area networks, for use in selection of a route for a shortcut path in a single PG hierarchy.

A native E.164 address of an exchange LS corresponding to a destination peer group is set in a table, for each peer group layer to which each exchange LS belongs, e.g., for each of the peer groups PG-A.2 and PG-A.2.1 in the case of the exchange LS2.

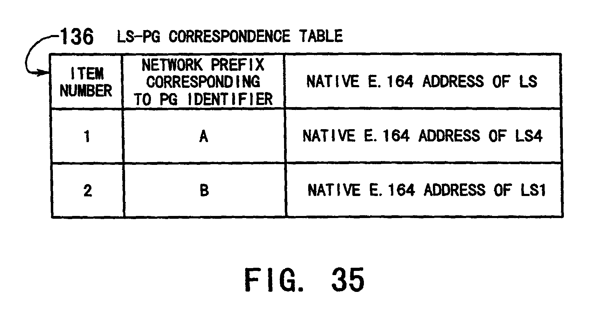

In the case of the public ATM exchange LS1, an operation manager of the public network 2 sets the contents of the LS-PG correspondence table 136. Fig. 35 is a diagram illustrating the contents of the LS-PG correspondence table 136.

When a peer group includes a public ATM exchange LS, a native E.164 address of a public ATM exchange LS is recorded corresponding to each peer group identifier (PG identifier network prefix), in the LS-PG correspondence table 136.

In Fig. 35, the native E.164 address of the public ATM exchange LS1 is recorded corresponding to the peer group identifier PG-B, since the peer group PG-B includes the public ATM exchange LS1.

Since only one PNNI logical virtual link exists between the peer groups PG-B and PG-A, and the public ATM exchange LS1 is connected to the public ATM exchange LS4, the native E.164 address of the public ATM exchange LS4 is recorded corresponding to the peer group identifier PG-A. Since the peer groups PG-A.5 includes no public ATM exchange, nothing is recorded corresponding to the peer group identifier PG-A.5.

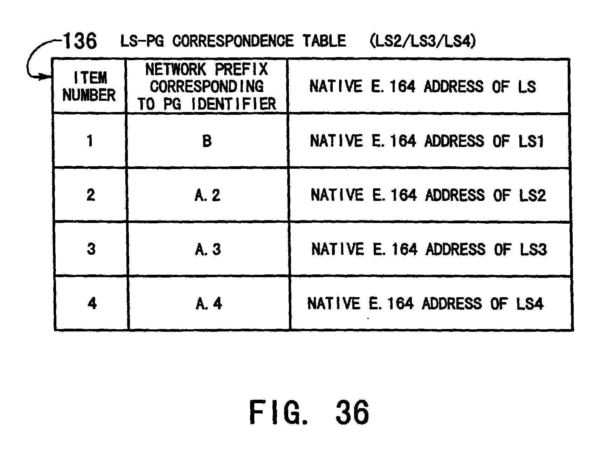

On the other hand, the LS-PG correspondence table for the public ATM exchanges LS2 to LS4 is illustrated in Fig. 36. Since the public ATM exchanges LS2 to LS4 are at the same layer in the peer group PG-A, the LS-PG correspondence tables in the public ATM exchanges LS2 to LS4 are identical.

Since the network of Fig. 36 includes the public ATM exchange LS1 which belongs to the peer group PG-B, the native E.164 address of the public ATM exchange LS1 is recorded corresponding to the peer group identifier PG-B. Similarly, the native E.164 address of the public ATM exchange LS2 is recorded corresponding to the peer group identifier PG-A.2, the native E.164 address of the public ATM exchange LS3 is recorded corresponding to the peer group identifier PG-A.3, and the native E.164 address of the public ATM exchange LS4 is recorded corresponding to the peer group identifier PG-A.4.

The destination correspondence table 137 is a table which is used for selecting a route for a shortcut over more than one PG hierarchy, and is produced based on a response message from a destination-side public ATM exchange LS in response to a request message from a source-side public ATM exchange.

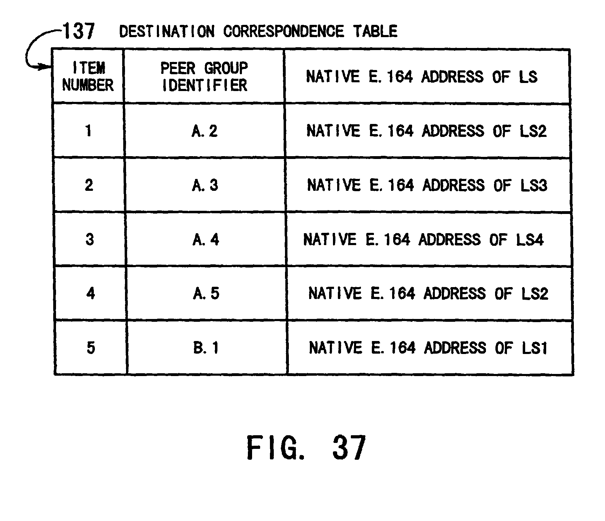

As illustrated in Fig. 37, in the destination correspondence table 137, the item numbers (as identifiers of the topology databases) are recorded corresponding to the peer group identifiers (PGs) of the PNNI networks including the public ATM exchanges LS, and the peer group identifiers of local area networks accommodated by the public ATM exchanges LS are recorded with the corresponding native E.164 addresses of the public ATM exchanges LS, respectively.

In this table, a multi-homed local area network, i.e., a local area networks which is accommodated by more than one public ATM exchange LS is not recorded. Since the peer groups PG-A.2 and PG-A.5 are accommodated by the public ATM exchange LS2, the peer group identifiers PG-A.2 and PG-A.5 are recorded corresponding to the native E.164 address of the public ATM exchange LS2.

Similarly, the peer group identifier PG-A.3 is recorded with the corresponding native E.164 address of the public ATM exchange LS3, and the peer group identifier PG-A.4 is recorded with the corresponding native E.164 address of the public ATM exchange LS4.

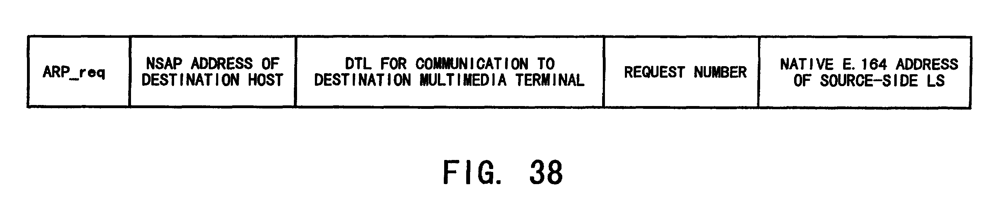

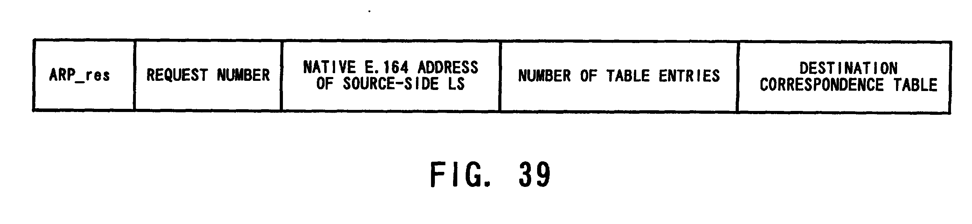

The contents of a packet of a request message sent from the source-side public ATM exchange to the destination-side public ATM exchange and the contents of a packet of a response message sent from the destination-side public ATM exchange to the source-side public ATM exchange are illustrated in Fig. 38 and Fig. 39, respectively.

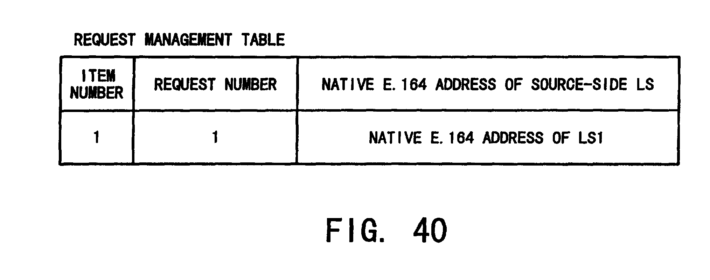

The request message of Fig. 38 includes a message type, ARP_req, and four data items. The NSAP address of the destination host is, for example, the NSAP address of the terminal Y. Since a PNNI routing path in the public network is used for transmitting the request message, the request message contains as route information DTLs produced by the source-side public ATM exchange LS. An identical request number is used in the request message and the corresponding response message, and is held by relay public ATM exchanges LS until the response message passes the relay public ATM exchanges LS. The contents of a holding table in the relay public ATM exchanges LS are illustrated in Fig. 40. The correspondence between the request number and the native E.164 address of the source-side public ATM exchange LS is recorded in the holding table.

The response message of Fig. 39 includes a message type, ARP_res, and four data items. The PG identifier is a PG identifier of a local area network accommodated by a destination-side public ATM exchange. More than one PG identifier may be contained for some form of accommodation by destination-side public ATM exchanges LS. The request number is identical with that in the request message.

The call setup operation is explained below. The following explanations are provided for the case where the terminal X accommodated by the peer group PG-B.2 is PNNI-connected to the terminal Y accommodated by the peer group PG-A.5.

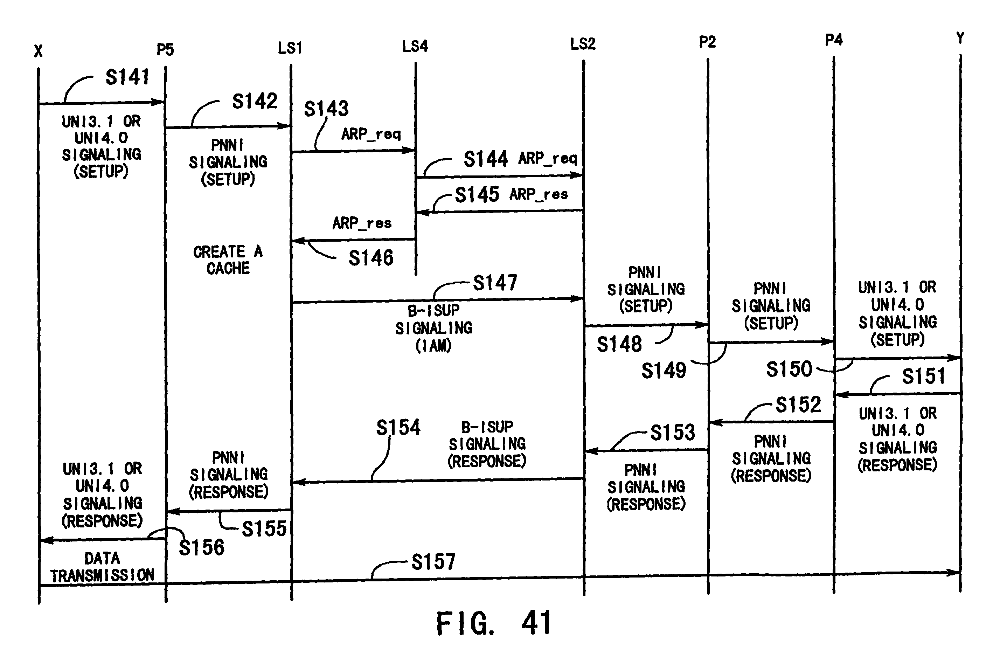

Fig. 41 is a diagram illustrating a setup sequence for establishing a shortcut path in a single PG hierarchy, as a call setup route in a public network.

In step S141, the terminal X sends to the private branch ATM exchange P5 a UNI signaling message (SETUP) which contains information on the terminal Y as a destination.

When the private branch ATM exchange P5 receives the UNI signaling message (SETUP), the private branch ATM exchange P5 refers to the topology database to select an optimum route (e.g., a route determined based on distance information and states of congestion in links) to a peer group to which the destination belongs, and produces DTLs designating a route from its own node PG-B.1 to the peer group PG-A, for a call setup.

The DTL (Designated Transit List) information element is an information element designating a route for a call setup, and has a format as illustrated in Fig. 21. In addition, Figs. 22 and 23 are diagrams illustrating processing flows of production and removal of DTLs. At this time, a level 1 DTL (PG-B -> PG-A) and a level-2 DTL (PG-B.2 -> PG-B.1) in the peer group PG-B are produced, and the transit points are set in PG-B at level 1, and in PG-B.2 at level 2.

In step S142, in accordance with the DTLs, the private branch ATM exchange P5 sends a PNNI signaling message (SETUP) which contains the above DTLs, to the public ATM exchange LS1, which accommodates the peer group PG-B.1.

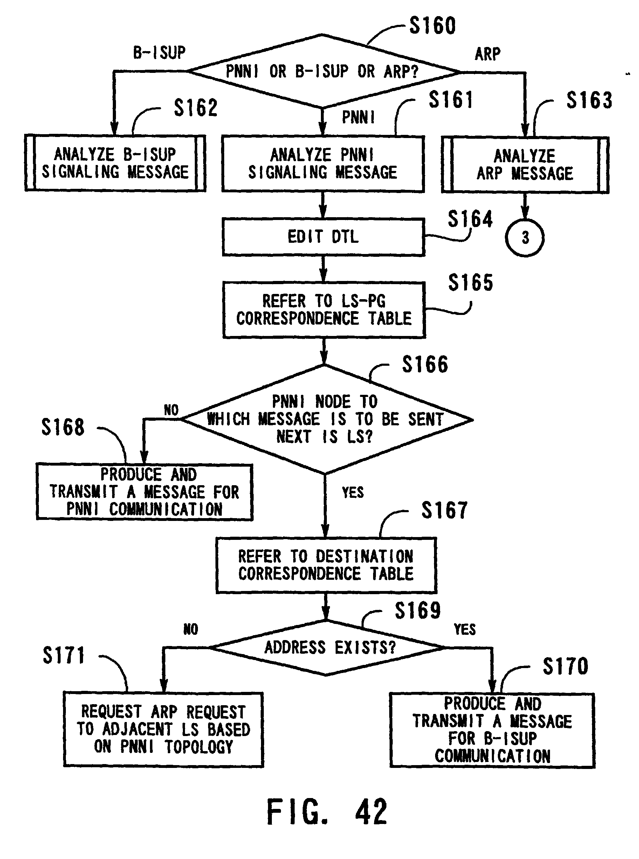

Fig. 42 is a diagram illustrating a flow of signaling processing in a source-side public ATM exchange. When a message received by the public ATM exchange LS1 is a PNNI message, the communication control means 135 in the public ATM exchange LS1 transfers the message to the PNNI signaling processing means 133 in step S160.

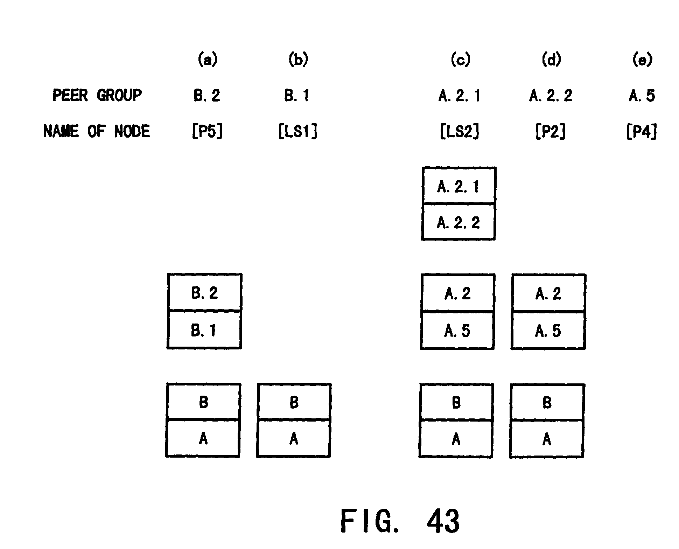

The PNNI signaling processing means 133 analyzes the DTLs in step S161, and edits the level-2 DTL in step S164, since the message exits from the peer group PG-B. A processing flow of production and removal of DTLs is illustrated in Fig. 43.

Then, the PNNI signaling processing means 133 refers to the LS-PG correspondence table 136, and determines, in step S166, whether or not a node to which the message is to be sent next is a public ATM exchange LS. In this case, the peer group identifier of the node to which the message is to be sent next is PG-A, and the public ATM exchange LS4 exists corresponding to PG-A. Therefore, the PNNI signaling processing means 133 recognizes that the node to which the message is to be sent next is a public ATM exchange LS, and refers to the destination correspondence table 137 in step S167.

When a native E.164 address of a destination-side public ATM exchange corresponding to the destination PG is not recorded in the destination correspondence table 137 (in step S169), the PNNI signaling processing means 133 packs in the ARP_req message a calculated request number, an AESA (ATM End System Address) of the destination host, DTLs, and the native E.164 address of the node to which the PNNI signaling processing means 133 belongs, and sends the ARP_req message to the adjacent public ATM exchange LS4 in steps S171 and S143.

The public ATM exchange LS4 determines the message type by the communication control means 135, and transfers the message to the ARP processing means 138 in step S160.

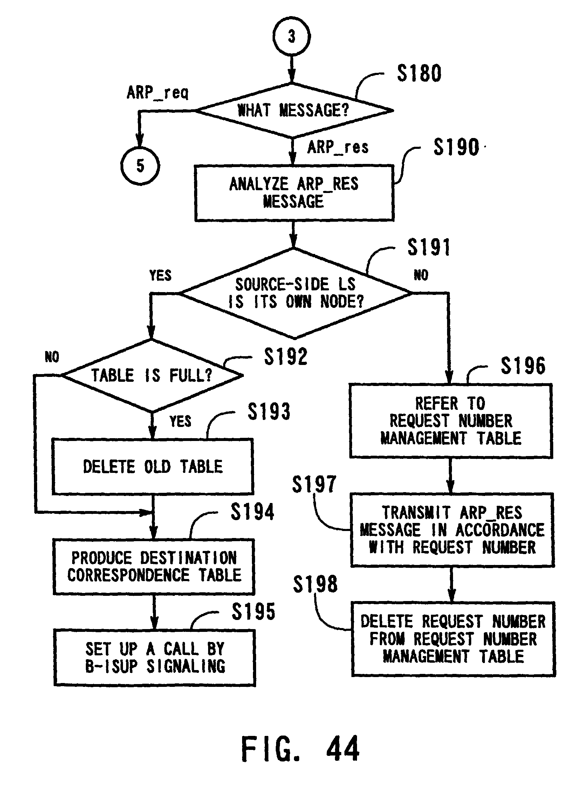

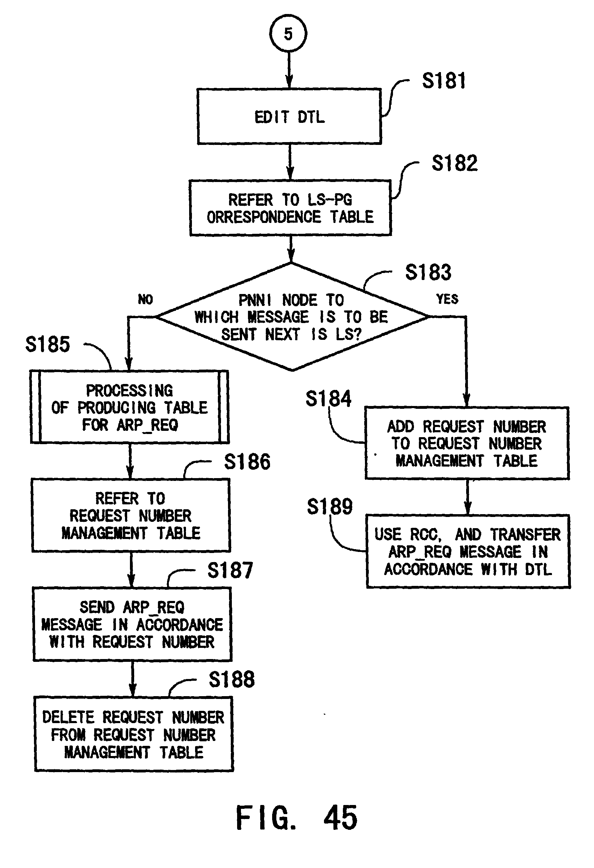

Figs. 44 and 45 illustrates a flow of ARP message analysis, i.e., a flow of processing of the address resolution protocol executed by the ARP processing means 138.

In step S180, the ARP processing means 138 determines the message type of the message, and recognizes that the received message is an ARP message. In step S181, the ARP processing means 138 edits the DTLs in the message, and recognizes that the peer group to which the message is to be sent next is PG-A.2. In addition, in step S182, the ARP processing means 138 refers to the LS-PG correspondence table 136, and determines, in step S183, whether or not the node to which the message is to be sent next is a public ATM exchange LS.

When the node to which the message is to be sent next is a public ATM exchange LS, the ARP processing means 138 records the correspondence between the request number contained in the message and the native E.164 address of the source-side public ATM exchange LS1, in the request number management table, in step S184.

Since, in this example, the node to which the message is to be sent next is the public ATM exchange LS2, the public ATM exchange LS4 uses an RCC, and sends the ARP message to the public ATM exchange LS2 in steps S189 and S144.

When the node to which the message is to be sent next is not a public ATM exchange LS, the ARP processing means 138 produces an ARP message, since, in this example, the node to which the message is to be sent next is the private branch ATM exchange P2. The public ATM exchange LS2 secures the destination correspondence table as a table for the ARP_req message in step S185.

In addition, in step S186, the ARP processing means 138 refers to the request number management table, which indicates the correspondence between the request number contained in the ARP_req message and the native E.164 address of the source-side public ATM exchange LS1, and then sends the ARP_req message to a designated interface in step S187. After the message is sent, the request number referred to is deleted from the request number management table in steps S188 and S145.

In step S180, the public ATM exchange LS4 which receives the ARP_req message determines the message type by the communication control means 135, and transfers the message to the ARP processing means 138.

In steps S190 and S191, the ARP processing means 138 analyzes the information on the source-side public ATM exchange LS contained in the message, to determine whether or not the information on the source-side public ATM exchange LS contained in the message indicates the public ATM exchange LS to which the 138 belongs. Since, in this example, the source-side public ATM exchange LS is the public ATM exchange LS1, the ARP processing means 138 starts preparation for message transfer.

In step S196, the public ATM exchange LS4 refers to the request number management table, transmits the ARP_req message in step S197, and deletes the request number referred to from the request number management table in steps S198 and S146.

When the node to which the ARP processing means 138 belongs is the source-side public ATM exchange LS, in step S194, the ARP processing means 138 stores, in the destination correspondence table which is controlled by the source-side public ATM exchange LS, a table of correspondence between the peer group identifier and the address of the destination-side public ATM exchange LS, which is contained in the message as table information, since, in this example, the source-side public ATM exchange LS is the public ATM exchange LS1.

Further, when the destination correspondence table 137 is full in the above circumstance (in step S192), an old table information item is deleted in step S193, and thereafter the above correspondence table is stored.

Next, in step S195, the ARP processing means 138 instructs the B-ISUP signaling processing means 134 to perform an operation for setting up a call to the destination-side public ATM exchange LS2.

The B-ISUP signaling processing means 134 produces a B-ISUP IAM message directed to the native E.164 address of the public ATM exchange LS2, inserts the DTL information and the destination NSAP address for transmission in the PNNI networks, in the fields of PNNI USER/USER INFORMATION ELEMENT In the format of B-ISUP USER/USER INFORMATION ELEMENT illustrated in Fig. 26, and sends the B-ISUP IAM message to the public network in step S147.

As illustrated in Fig. 42, when the message received by the public ATM exchange LS2 is a B-ISUP message (in step S160), the communication control means 135 in the public ATM exchange LS2 transfers the message to the B-ISUP signaling processing means 134 in step S162.

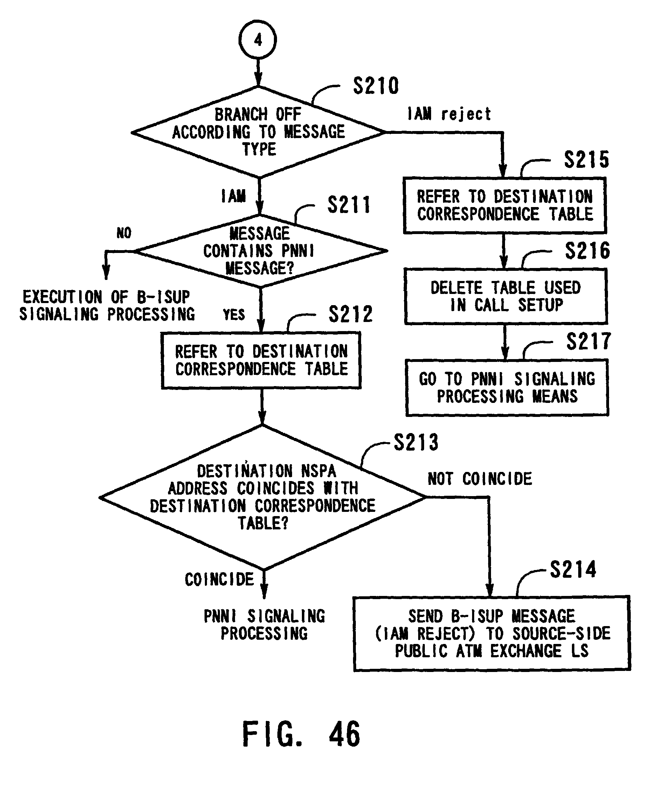

Then, in accordance with the flow of Fig. 46, the B-ISUP signaling processing means 134 determines the message type of the B-ISUP IAM message in step S 210, and determines, in step S211, whether or not the B-ISUP IAM message contains a PNNI message. Since, in this case, the B-ISUP IAM message contains a PNNI message, the B-ISUP signaling processing means 134 refers to the destination correspondence table in step S212.

Since, in this case, the destination NSAP address coincides with an information item in the destination correspondence table (Fig. 37) controlled by the public ATM exchange LS to which the B-ISUP signaling processing means 134 belongs, as a result of the above reference to the destination correspondence table (in step S213), the public ATM exchange LS starts preparation for transmission, by the PNNI signaling processing, of a PNNI message to the private branch ATM exchange P2, which is the next node.

The PNNI signaling processing means 133 analyzes the PNNI message contained in the IAM message, additionally produces a level-3 DTL (PG-A.2.1 -> PG-A.2.2) for a call setup in the peer group PG-A.2, and sets a transit pointer in PG-A.2, as illustrated in Fig.43.

Then, the PNNI signaling processing means 133 packs the DTLs in a PNNI signaling message (SETUP), and sends the PNNI signaling message (SETUP) to the intra-PNNI-network ATM exchange P2 in step S148.

The intra-PNNI-network ATM exchange P2 receives the PNNI signaling message (SETUP), and analyzes the DTLs. Since, as a result of the analysis, the intra-PNNI-network ATM exchange P2 recognizes that the message exits from the peer group PG-A.2, the intra-PNNI-network ATM exchange P2 deletes the level-3 DTL from the above DTLs, and sends a SETUP message to the intra-PNNI-network ATM exchange P4 in step S149.

When the intra-PNNI-network ATM exchange P4 receives the SETUP message, the intra-PNNI-network ATM exchange P4 sends a UNI signaling message (SETUP) to the terminal Y in step S150.

The response message from the terminal Y is transmitted through a route of the above SETUP message in steps S151 to S156.

Thus, a communication path is established between the terminals X and Y through the public network (in step S157).

In the above example, an ARP_req message is sent to a destination-side public ATM exchange LS, and a call setup operation is performed by using a shortcut path to the destination-side public ATM exchange over more than one PG hierarchy, based on information obtained from an ARP_res message which is a response to the above ARP_req message. Alternatively, it is possible to transfer a message through a route along a shortcut in a single PG hierarchy. That is, the call setup operation can be performed through a route of LS1 -> LS4 -> LS2 in the network of Fig. 32.

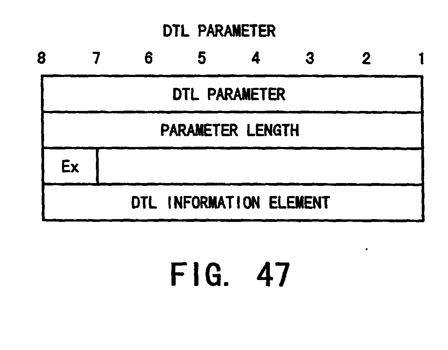

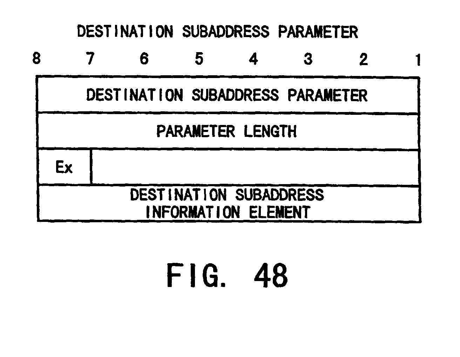

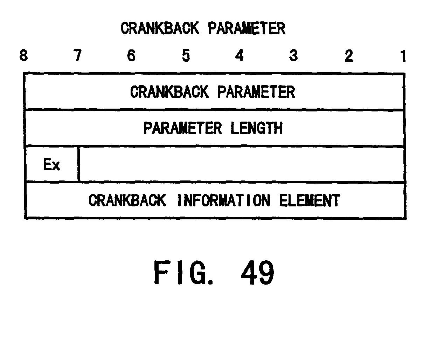

Further, in the above example, the DTL information and the destination NSAP address for transmission in the PNNI networks are inserted in the fields of PNNI USER/USER INFORMATION PARAMETER in the format of B-ISUP USER/USER INFORMATION PARAMETER illustrated in Fig. 26 during the B-ISUP signaling processing, and transmitted. Alternatively, the DTL information and the destination NSAP address for transmission in the PNNI networks can be inserted in the DTL PARAMETER illustrated in Fig. 47 or the DESTINATION SUBADDRESS PARAMETER illustrated in Fig. 48 for transmission to the public network 2. In addition, Fig. 49 is a diagram illustrating a format of CRANKBACK PARAMETER.

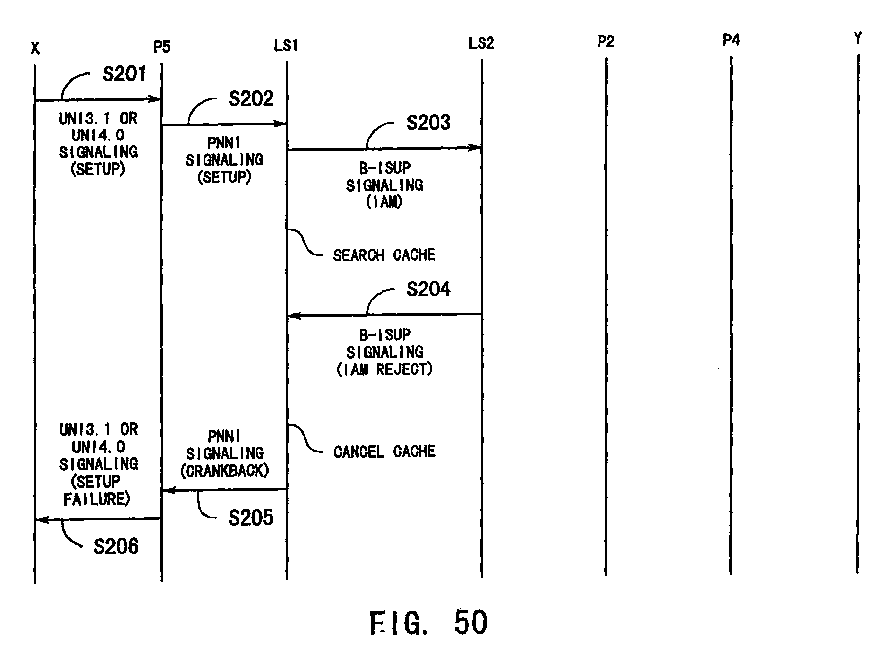

Next, update of the destination correspondence table 137 in the case of failure in a call, setup operation is explained below. Fig. 50 is a diagram illustrating a sequence of updating a destination correspondence table when a shortcut path over a plurality of PG hierarchies is used as a call, setup route in a public network, and the call setup operation fails.

The following explanation is provided for a SETUP sequence in the case where a call from the terminal Y accommodated by the peer group PG-B.2 to the terminal Y accommodated by the peer group PG-5 in the network of Fig. 32 is requested, and a call setup operation fails due to an error in the destination correspondence table. In the explanation, it is assumed that the link between the private branch ATM exchange P2 and the private branch ATM exchange P4 is disconnected, and inconsistency occurs between the destination correspondence tables in the public ATM exchanges LS2 and LS1.

Since, in the sequence of Fig. 50, a portion (in steps S201 to S203) of the call setup sequence up to the B-ISUP signaling (IAM) to the destination-side public ATM exchange is identical to a corresponding portion in the aforementioned call setup sequence, the explanation on the portion is not repeated.

Since the B-ISUP signaling message (IAM) contains a PNNI signaling message (step S211 in Fig. 46), when the public ATM exchange LS2 receives a B-ISUP signaling message (IAM), the message is transferred to the PNNI signaling processing means 133.

In step S212, the PNNI signaling processing means 133 compares the destination NSAP address information with the destination correspondence table controlled by the public ATM exchange LS2, and determines, in step S213, whether or not the destination NSAP address is consistent with the peer group identifier and the native E.164 address of the destination-side public ATM exchange.

Since, in this example, the destination NSAP address is not consistent with the peer group identifier and the native E.164 address of the destination-side public ATM exchange, the PNNI signaling processing means 133 sends a B-ISUP signaling message (IAM reject) to the source-side public ATM exchange LS1 by the B-ISUP signaling processing in steps S204 and S214.

When the source-side public ATM exchange LS1 receives the message, and recognizes that the message type is IAM reject, the public ATM exchange LS1 deletes the information item (PG-A.5 and the native E.164 address of the public ATM exchange LS2) in the destination correspondence table which has been referred to during the call setup operation in the public network, in steps S215 and S216.

Thereafter, the source-side public ATM exchange LS attempts again a call setup in the public network by an ARP_req sequence in step S217. However, since, in this example, no other call setup path exists, the source-side public ATM exchange LS sends to the private branch ATM exchange P5 a PNNI signaling message (crankback) for the case of failure in the call setup operation, in step S205.

Since the private branch ATM exchange P5 is the node which has produced the DTLs, the private branch ATM exchange P5 attempts to produce DTLs again. However, since, in this example, no other call setup path exists, the private branch ATM exchange P5 sends to the terminal X a UNI signaling message for the case of failure in the call setup operation, in step S206.

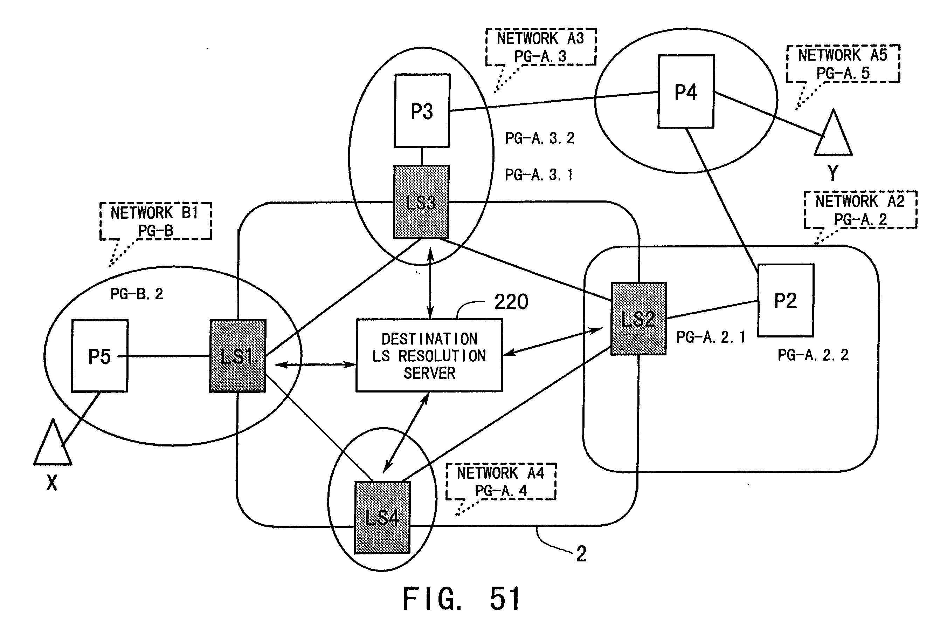

Next, the construction of the network in which a destination LS resolution server is explained. Fig. 51 is a diagram illustrating an example of a physical configuration of a network in the case where the destination LS resolution server is arranged.

In Fig. 51, the destination LS resolution server 220 is arranged in the public network, and a PVC for exchanging an ARP_req message and an ARP_res message is provided between the destination LS resolution server 220 and each of the public ATM exchanges LS1 to LS4.

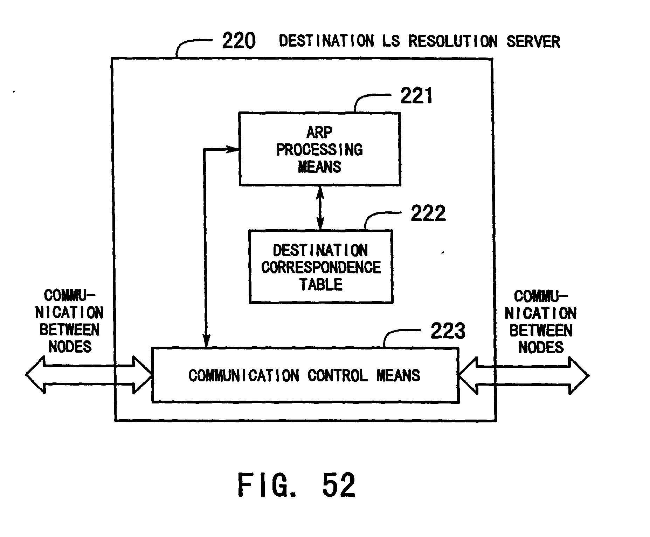

Next, the construction and the operation flow of the destination LS resolution server 220 are explained below. Fig. 52 is a diagram illustrating the function blocks of a destination LS resolution server.

In Fig. 52, the communication control means 223 has a function of exchanging, through the PVC, an ARP_req message, an ARP_res message, and an Inverse_ARP message between the ARP processing means 221 and each LS which accommodates a local area network.

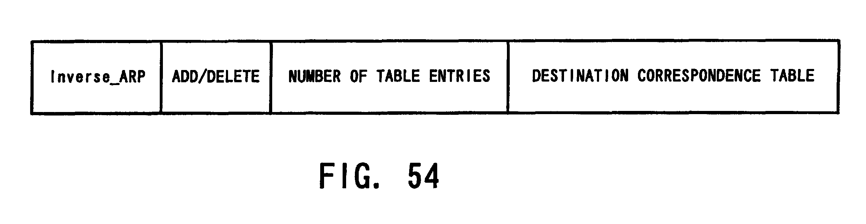

The format and contents of the Inverse_ARP message are indicated in Fig. 54.

In Fig. 54, the number of table entries is the total number of entries in the destination correspondence table included in the message. The formats and contents of the ARP_req message and the ARP_res message used in this case are similar to those indicated in Figs. 38 and 39, respectively.

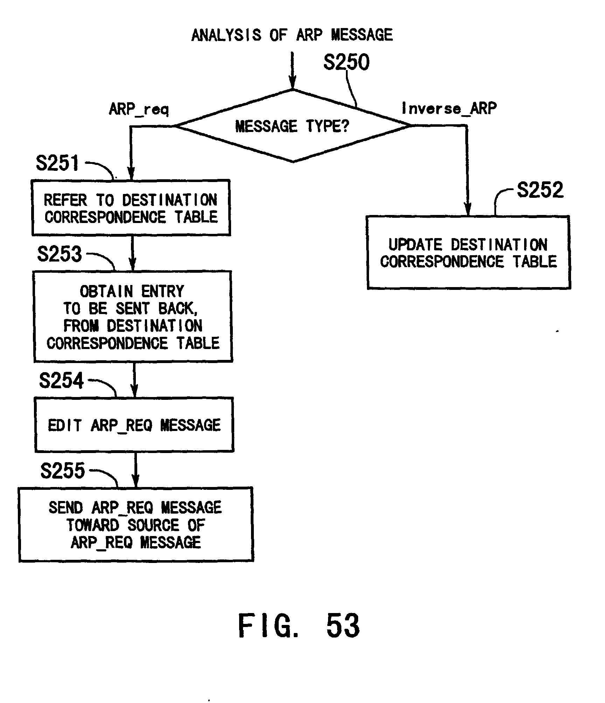

The ARP processing means 221 obtains an entry of the destination correspondence table corresponding to an ARP_req message sent from a source-side LS, by using the communication control means 223 and the destination correspondence table 222 in accordance with the flow of Fig. 53, inserts the entry in an ARP_req message, and sends back the ARP_res message.

In addition, the destination correspondence table controlled by the destination LS resolution server 220 is updated when the ARP processing means 221 receives an Inverse_ARP message from an LS.

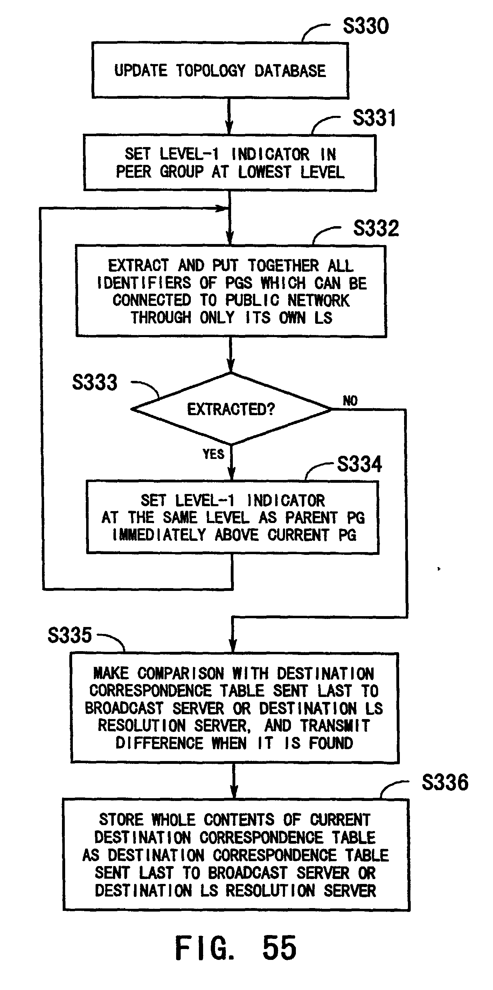

In the LS which sends the Inverse_ARP message, a destination correspondence table is updated in accordance with the flow of Fig. 55. When a difference occurs in the destination correspondence table due to the update, the LS sends an Inverse_ARP message to the destination LS resolution server 220.

Next, processing of setting an SVC is explained below. Each LS which accommodates a local area network can determine a destination-side LS by using the destination LS resolution server 220, and can store the information on the destination-side LS in the destination correspondence table.

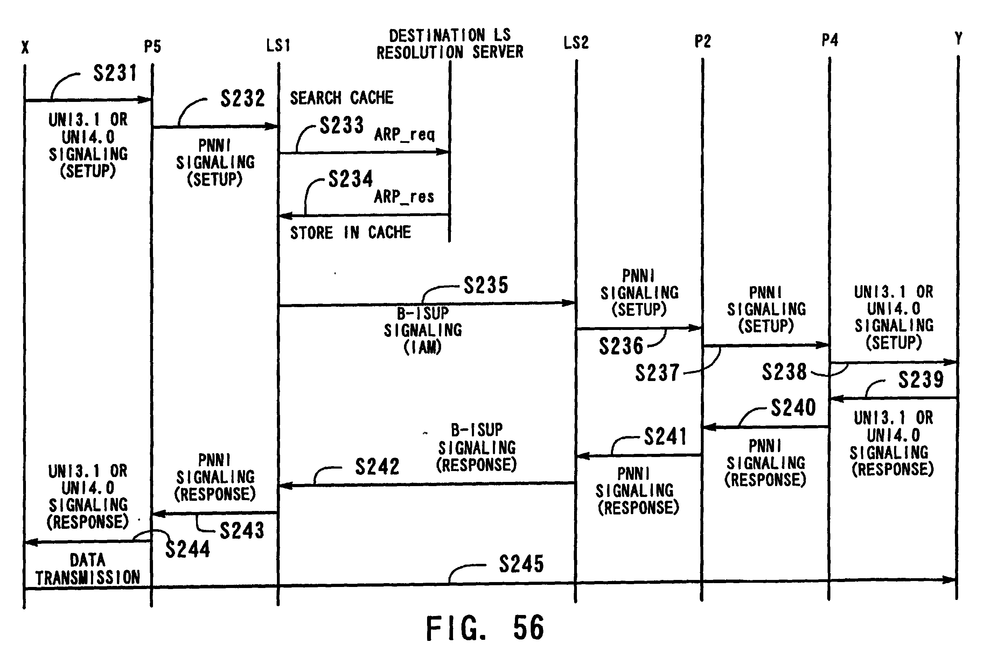

In practice, the destination-side LS resolution server 220 is utilized in the sequence of Fig. 56 in which an ARP_res message and an Inverse_ARP message are exchanged.

After a destination LS is determined, an SVC is established between the LS which has determined the destination-side LS and the destination-side LS based on B-ISUP, and another SVC is established between the destination-side LS and a destination terminal based on PNNI/UNI3.1 or 4.0.

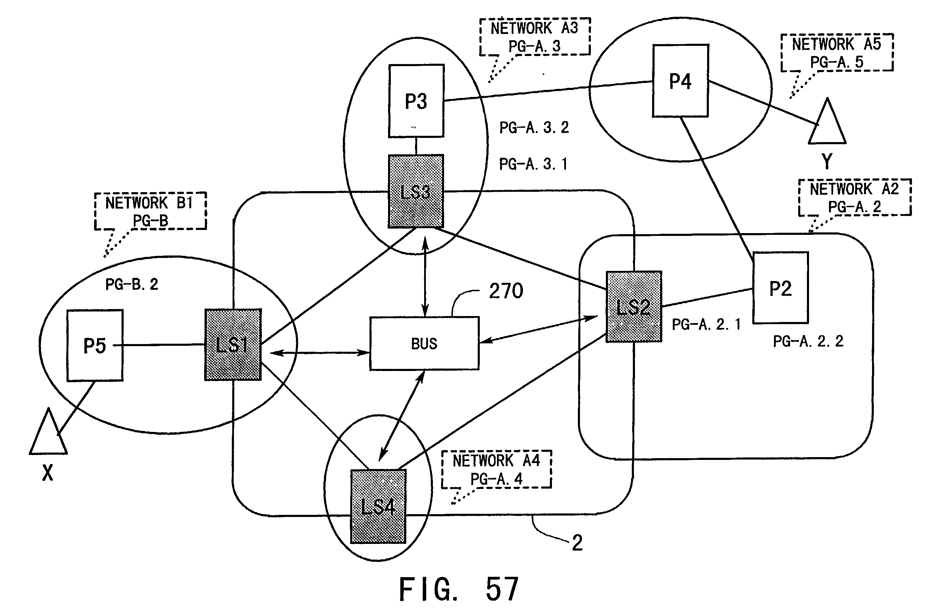

The construction of the network in which a broadcast server is provided is explained below. Fig. 57 is a diagram illustrating an example of a physical configuration of a network in which a broadcast server is arranged.

In Fig. 57, a broadcast server (BUS) 270 is arranged in the public network 2, and an SVC or a PVC is provided between the broadcast server 270 and each LS which accommodates a local area network so that the broadcast server 270 receives an Inverse_ARP message from each LS.

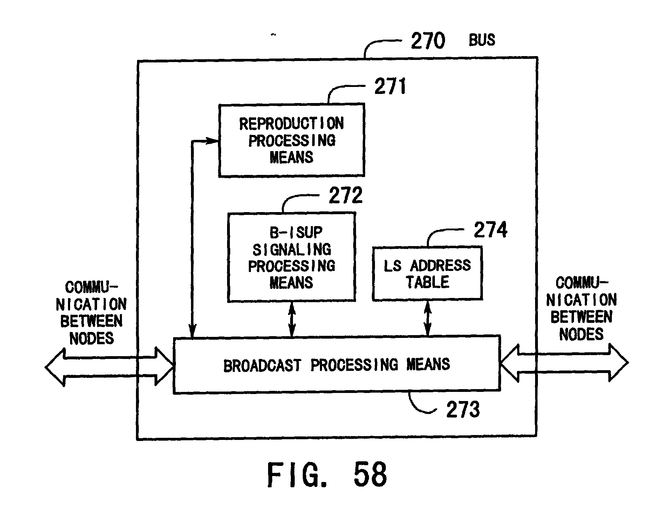

The construction and the operation flow of the broadcast server 270 are explained below. Fig. 58 is a diagram illustrating the function blocks of a broadcast server.

The B-ISUP signaling processing means 272 has a function of a B-ISUP protocol for establishing an SVC between the broadcast server 270 and each LS accommodating a local area network, and the reproduction processing means 271 reproduces the received Inverse_ARP message. Since the format and contents of the Inverse_ARP message are explained before, the explanation is not repeated.

The broadcast processing means 273 has a function of broadcasting to all of the LSs an Inverse_ARP message sent from an arbitrary LS, by using the reproduction processing means 271, the B-ISUP signaling processing means 272, and an LS address table 274 which holds native E.164 addresses of the LSs each accommodating a local area network. In addition, the LS address table 274 is controlled by association of operations.

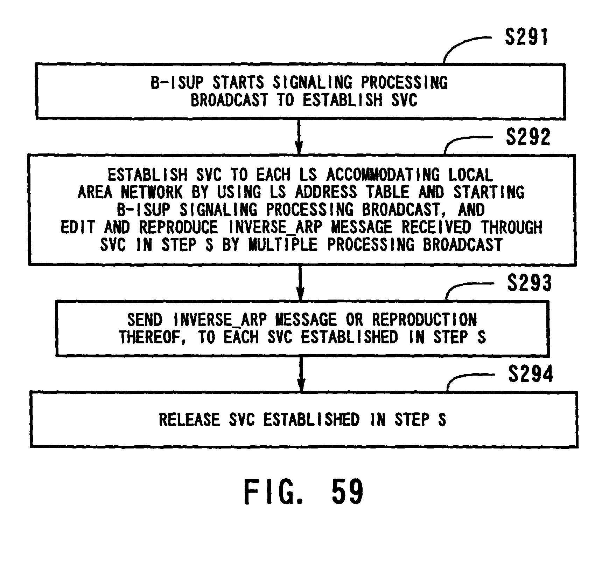

Fig. 59 is a diagram illustrating an operation flow of the broadcast processing means 273. When a PVC is used for connection between the broadcast server 270 and each LS, the B-ISUP signaling processing means 272 and the SVC setup/release sequence are unnecessary. That is, the Inverse_ARP message and the reproduced Inverse_ARP message can be transmitted through the PVC.

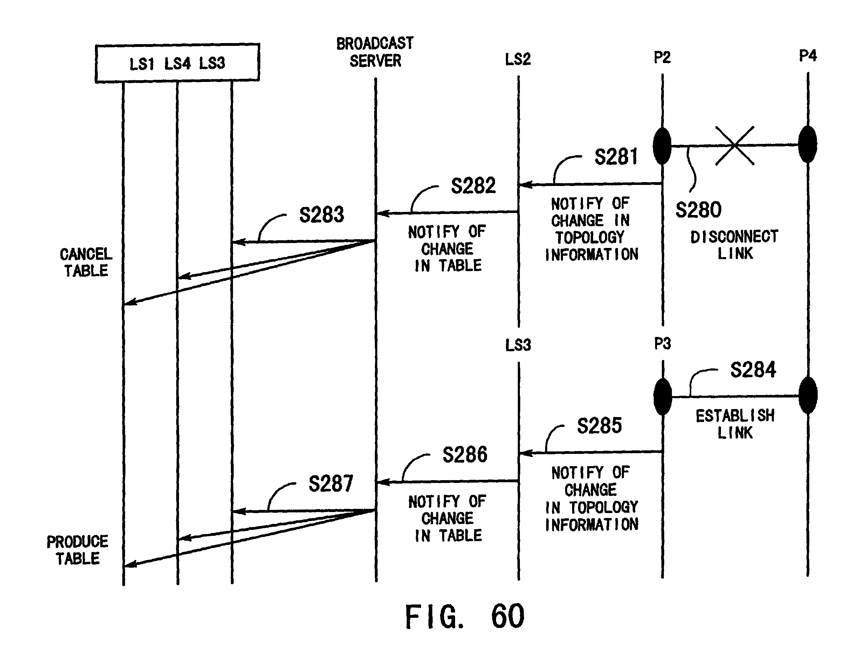

The logic for transmission of the Inverse_ARP message at the source LS of the Inverse_ARP message is similar to that for the destination LS resolution server 220. Fig. 60 is an example of a sequence diagram of operations which are performed when the link between the P2 and P4 is changed to the link between the P3 and P4 in Fig. 57, where the sequence of Fig. 60 is performed by executing the flows of Figs. 59 and 55.

Next, processing of setting an SVC in the public network is explained below.

Since each LS accommodating a local area network has a destination correspondence table, and the broadcast server 270 is used, it is possible to determine an LS to which the SVC is to be established in response to a SETUP message received from a local area network, by using the destination correspondence table. Therefore, the sequences using the ARP_req message and the ARP_res message as illustrated in Figs. 38 and 39 can be dispensed with.

Next, operations for a call setup and production of a destination correspondence table which are performed in the case where the destination correspondence table is sent back after the call setup are explained below. The ARP processing means 138 in a public ATM exchange LS packs an ARP_req message in a call setup message, and sends the call setup message to a destination-side exchange LS. In this case, the ARP processing means 138 in the destination-side exchange LS packs an ARP_res message in a message of call setup completion, and sends back the message of call setup completion to the source-side exchange LS. The format and contents of the information packed in the ARP_req message and the ARP_res message are illustrated in Figs. 38 and 39, respectively.

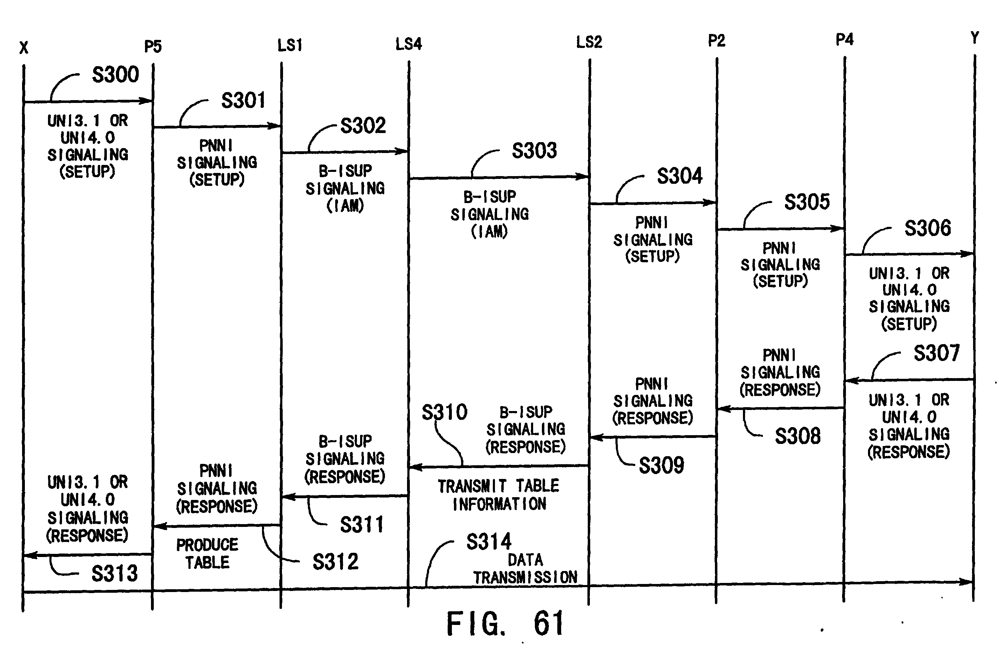

Fig. 61 is a diagram illustrating a SETUP sequence in the case where a destination correspondence table is sent to a source-side public ATM exchange LS after setting up a call in the public network. The sequence of Fig. 61 is a sequence for the first call setup.

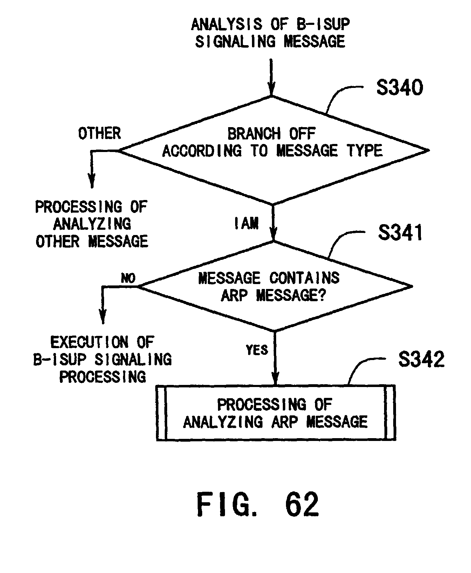

In the illustrated sequence, the ARP processing means 138 in the source-side public ATM exchange LS1 and the relay public ATM exchange LS4 send an ARP_req message to the destination-side public ATM exchange LS2 in accordance with the flows of Figs. 62 to 64 by using the communication control means 135 and the LS-PG correspondence table 136.

The ARP processing means 138 in the destination-side public ATM exchange LS2 packs, in a ARP_res message contained in a B-ISUP signaling message, a destination correspondence table controlled by the public ATM exchange LS2, and sends the B-ISUP signaling message in accordance with the flow of Fig. 50.

Next, an explanation is provided for the case where the terminal X accommodated by the peer group PG-B.2 is PNNI-connected with the terminal Y accommodated by the peer group PG-A.5 through the public network in the network of Fig. 32.

In the sequence of Fig. 61, the terminal X sends a UNI signaling message (SETUP) containing information indicating the terminal Y as a destination, to the private branch ATM exchange P5, in step S300.

When the private branch ATM exchange P5 receives the UNI signaling message (SETUP), the private branch ATM exchange P5 refers to a topology database for selecting an optimum route (e.g., a route determined based on distance information and states of congestion in links) to the peer group to which the destination belongs, and produces DTLs designating a route from the node PG-B.1 of the private branch ATM exchange P5 to the peer group PG-A, for a call setup. At this time, a level-1 DTL (PG-B -> PG-A) and a level-2 DTL (PG-B.2 -> PG-B.1) in the peer group PG-B are produced, and the transit points are set in PG-B at level 1, and in PG-B.2 at level 2.

Then, the private branch ATM exchange P5 sends a PNNI signaling message containing the DTLs for the call setup, to the public ATM exchange LS1 which belongs to the peer group PG-B.1, in accordance with the DTL, in step S301.

When the public ATM exchange LS1 receives the PNNI signaling message, the public ATM exchange LS1 refers to the LS-PG correspondence table, and starts preparation for a call setup operation in a single PG hierarchy.

In this example, the public ATM exchange LS1 sends a B-ISUP (IAM) signaling message to the public ATM exchange LS4 in step S302. At this time, in order to obtain a destination correspondence table which is necessary for a call setup operation over more than one hierarchy (LS1 to LS2), an ARP_req message is packed in the B-ISUP message.

When the public ATM exchange LS4 receives the B-ISUP message, the communication control means 135 in the public ATM exchange LS4 determines the message type in step S340, and recognizes that the message is an IAM message. In addition, in step S341, the communication control means 135 determines whether or not the message contains an ARP message. When the IAM message contains an ARP message, the ARP message is transferred to the ARP processing means 138 in step S342, and analyzed.

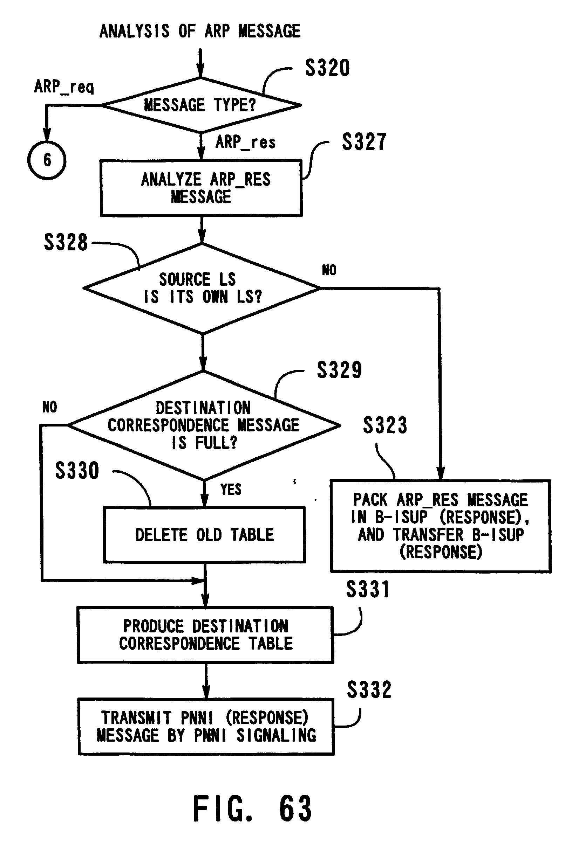

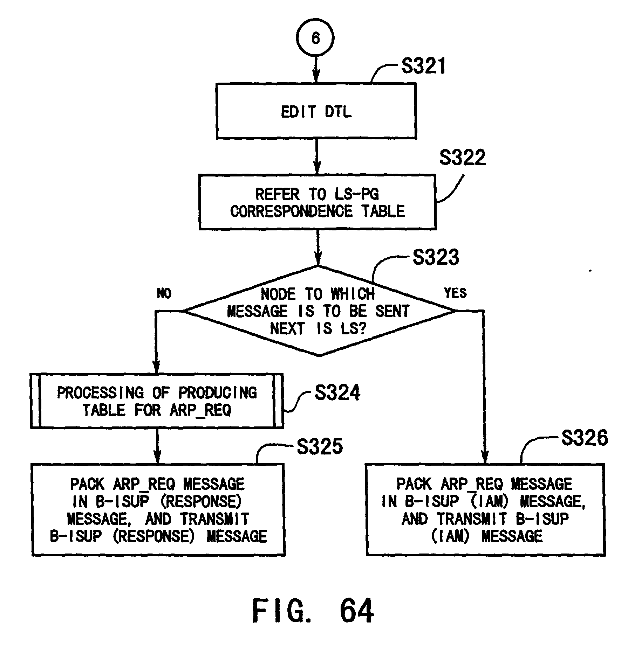

Figs. 63 and 64 are diagrams illustrating a flow of ARP message analysis in a public ATM exchange.

In step S320, the ARP processing means 138 determines the message type of the ARP message, and recognizes that the message is an ARP_req message. The public ATM exchange LS4, which is an ingress node of the peer group PG-A, edits the DTLs in step S321. In addition, the ARP processing means 138 refers to the LS-PG correspondence table 136 in step S322, and determines, in step S323, whether or not the node to which the message is to be sent next is an LS. Since, in this example, the next node is an LS, the ARP processing means 138 packs in a B-ISUP message the ARP_req message and an edited PNNI signaling message, and sends the B-ISUP message to the public ATM exchange LS2 in steps S326 and S303.

When the node to which the message is to be sent next is not an LS, the next node is the private branch ATM exchange P2 in this example. Therefore, the ARP processing means 138 refers to a destination correspondence table controlled by its own node, and produces an ARP_req message in step S324.

When a B-ISUP message (response) is transmitted to the public ATM exchange LS4 later, the ARP_req message produced as above is packed in the B-ISUP message in step S325.

When the processing of ARP analysis is completed, the public ATM exchange LS2 sends a PNNI signaling message (SETUP) to the private branch ATM exchange P2, in accordance with PNNI topology information, in step S304.

The intra-PNNI-network ATM exchange P2 receives the PNNI signaling message (SETUP), and analyzes the DTLs.

Since, as a result of the analysis, the message exits from the peer group PG-A.2, the intra-PNNI-network ATM exchange P2 deletes a level-3 DTL from the DTLs, and sends a SETUP message to the intra-PNNI-network ATM exchange P4 in step S305.

When the intra-PNNI-network ATM exchange P4 receives the SETUP message, the intra-PNNI-network ATM exchange P4 sends a UNI signaling message (SETUP) to the terminal Y in step S306.

The response message from the terminal Y is transmitted through the route of the SETUP message, in steps S307 to S313. Thus, a communication path is established between the terminals X and Y through the public network 2 in step S314.

On the midway of the sequence (in step S309), when the public ATM exchange LS2 transmits a B-ISUP message (response) to the public ATM exchange LS4, the public ATM exchange LS2 packs an ARP_res message in the transmitted B-ISUP message (response).

In addition, the public ATM exchange LS1 analyzes an ARP_res message contained in the received B-ISUP signaling message, and produces a destination correspondence table, in a similar manner to the sequence of the invention 3, in steps S320 to S331.

As explained above, in the communication network system 1 according to the present invention, a plurality of exchanges LS are connected in the public network 2 so as to form a ring, and a shortcut path as an optimum route is established.

Therefore, it is possible to reduce the load of the PNNI signaling processing and the PNNI routing processing on the public ATM exchange which terminates a PNNI network, when communication is conducted between an arbitrary number of PNNI networks through a public network 2, and therefore the bandwidth resource in the public network 2 can be efficiently utilized.

As explained above, in the communication network system according to the present invention, exchanges are arranged in a ring topology in a public network, where each of the exchanges connects a local area network with a public network so as to form a private network. Therefore, a processing amount of the protocol functions can be reduced, and the bandwidth utilization efficiency can be enhanced.

The foregoing is considered as illustrative only of the principle of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

## Claims

1. A communication network system in which communication is conducted between an arbitrary number of sources and an arbitrary number of destinations, said communication network system comprising:
a public network;
a plurality of local area networks arranged in different local areas; and
a plurality of exchanges which connect said plurality of local area networks with said public network so as to form a plurality of private networks, and are arranged in a ring topology in said public network so that information for communication is transmitted and received between adjacent ones of said plurality of exchanges.

2. A communication network system according to claim 1, wherein, when a change in arrangement of at least one of said plurality of exchanges occurs, topology information after said change is set in exchanges adjacent to said at least one of said plurality of exchanges which is subject to said change, and transmitted between said plurality of exchanges.

3. A communication network system according to claim 1, wherein each of said plurality of exchanges has a recognition table for recognizing more than one of said plurality of private networks, when said each of said plurality of exchanges belongs to said more than one of said plurality of private networks;
when said each of said plurality of exchanges receives a routing message during a call setup operation, said each of said plurality of exchanges refers to said recognition table to determine one of said plurality of private networks from which said routing message is sent to said each of said plurality of exchanges, and updates a database of said topology information with information included in said routing message, where said database is provided for said one of said plurality of private networks from which said routing message is sent to said each of said plurality of exchanges.

4. A communication network system according to claim 1, wherein said plurality of private networks contain a private branch exchange, and said private branch exchange determines a path for a call setup, during an operation for the call setup, based on said topology information which is set by said plurality of exchanges, and outputs a call-setup request message which contains information on said path.

5. A communication network system according to claim 4, wherein, when at least one source-side exchange and at least one destination-side exchange among said plurality of exchanges belong to private networks in a single hierarchy, among said plurality of private networks, and one of said at least one source-side exchange receives said call-setup request message, said one of said at least one source-side exchange sets a shortcut path as a shortest path to a nearest one of said at least one destination-side exchange accommodating a destination terminal, based on said information on said path in said public network, and outputs a call-setup request message containing said information on said path, to said nearest one of said at least one destination-side exchange.

6. A communication network system according to claim 5, wherein, when one of said at least one destination-side exchange receives a message that a call setup is impossible, from a destination of said call-setup request message, said nearest one of said at least one destination-side exchange outputs a message that said call setup is impossible, to said nearest one of said at least one source-side exchange accommodating a source terminal, based on said information on said path.

7. A communication network system according to claim 6, wherein, when one of said at least one source-side exchange receives said message that the call setup is impossible, said one of said at least one source-side exchange sets a new shortcut path which is different from said shortest path in said public network, and outputs said call-setup request message containing information on said new shortcut path.

8. A communication network system according to claim 4, wherein a source-side exchange among said plurality of exchanges sets a shortcut path as a shortest path to a nearest one of said at least one destination-side exchange accommodating a destination terminal, based on said information on said path in said public network, and outputs a call-setup request message containing said information on said path, to said one of said at least one destination-side exchange.

9. A communication network system according to claim 4, wherein, when a source-side exchange among said plurality of exchanges receives said call-setup request message, said source-side exchange packs, in a new information element or a specific existing information element, an information element which is used in only a call setup protocol in said plurality of private networks, and said one of said at least one destination-side exchange extracts said information element.

10. A communication network system according to claim 4, wherein, when each of at least one source-side exchange and at least one destination-side exchange belongs to more than one private network among said plurality of private networks, said more than one private network is in a single hierarchy, said each of said at least one source-side exchange and said at least one destination-side exchange has a recognition table for recognizing said more than one private network, and a shortest path from one of said source-side exchange to a nearest one of said at least one destination-side exchange accommodating a destination terminal is set as a shortcut path based on a database of said topology information which is provided for one of said more than one private network which is recognized.

11. A communication network system according to claim 4, wherein, when at least one source-side exchange among said plurality of exchanges belongs to at least one first private network among said plurality of private networks, at least one destination-side exchange among said plurality of exchanges belongs to at least one second private network among said plurality of private networks, said at least one first private network belongs to a first hierarchy, said at least one second private network belongs to as hierarchy which is different said second hierarchy, and one of said at least one source-side exchange receives said call-setup request message, said one of said at least one source-side exchange sends said call-setup request message to a nearest relay exchange among said plurality of exchanges accommodating a destination terminal in said second hierarchy, based on said information on said path, receives address information as a response to said call-setup request message from one of said at least one destination-side exchange in said second hierarchy, and sets a shortcut path to said one of said at least one destination-side exchange over said first and second hierarchies.

12. A communication network system according to claim 11, wherein said one of said at least one source-side exchange stores said address information, and establishes, for a subsequent call setup, a connection of the shortcut path over said first and second hierarchies by referring to said address information.

13. A communication network system according to claim 11, wherein, when said operation of the call setup fails, said one of said at least one source-side exchange receives a call-setup-failure message, and cancels said address information which is used for the operation of the call setup.

14. A communication network system according to claim 11, wherein, when an area for storing said address information is full, said one of said at least one source-side exchange deletes an old item of the address information to store a new item of the address information.

15. A communication network system according to claim 11, wherein said public network includes a server having connections with said plurality of exchanges, said one of said at least one source-side exchange receives said address information from said server.

16. A communication network system according to claim 11, wherein said one of said at least one source-side exchange stores said address information obtained from said server, and establishes, for a subsequent call setup, a connection of the shortcut path over said first and second hierarchies by referring to said address information.

17. A communication network system according to claim 11, wherein, when a change in arrangement of at least one of said plurality of exchanges occurs, information on said change is sent to said server.

18. A communication network system according to claim 11, wherein said public network includes a broadcast server having connections with said plurality of exchanges, said one of said at least one source-side exchange receives said address information broadcasted by said broadcast server.

19. A communication network system according to claim 11, wherein, when a change in arrangement of at least one of said plurality of exchanges occurs, information on said change is sent to said broadcast server, and said broadcast server broadcasts said information on said change to said plurality of exchanges.

20. A communication network system according to claim 11, wherein one of said at least one destination-side exchange sends information on an address of one of said at least one destination-side exchange which accommodates a destination terminal in said second hierarchy, to said one of said at least one source-side exchange, after completion of said operation of the call setup, and a subsequent call is set up based on said information on the address.

21. An exchange which interconnects an arbitrary number of ATM-LANs through a public network, said exchange comprising:
routing processing means which executes routing processing in accordance with a PNNI protocol used in said arbitrary number of ATM-LANs;
a shortcut-path selection table which stores addresses for setting a shortcut path to a destination;
PNNI signaling processing means which selects an address of a destination-side nearest to said destination from among said addresses in said shortcut-path selection table; and
B-ISUP signaling processing means which executes signaling processing in accordance with a B-ISUP protocol used in said public network, and setting said shortcut path.

22. An exchange according to claim 21, being adapted to arrangement in said public network as one of exchanges arranged in a ring topology.

23. An exchange according to claim 21, wherein a plurality of peer groups are formed in at least one hierarchy in said arbitrary number of ATM-LANs, and said B-ISUP signaling processing means sets said shortcut path in at least one peer group in a single hierarchy, among said plurality of peer groups, based on route information in said public network.

24. An exchange according to claim 21, wherein a plurality of peer groups are formed in at least two hierarchies in said arbitrary number of ATM-LANs, and said B-ISUP signaling processing means sets said shortcut path in more than one peer group in different hierarchies, among said plurality of peer groups, based on route information in said public network.
